(19) Europäisches Patentamt
European Patent Office
Office européen des brevets

(11) EP 4 645 501 A1

(12) EUROPEAN PATENT APPLICATION
published in accordance with Art. 153(4) EPC

(43) Date of publication:
05.11.2025 Bulletin 2025/45

(21) Application number: 23938866.3

(22) Date of filing: 31.05.2023

(51) International Patent Classification (IPC):
*H01M 10/0565* (2010.01) *H01M 10/058* (2010.01)

(52) Cooperative Patent Classification (CPC):
**H01M 10/0525; H01M 10/049; H01M 10/0565; H01M 10/0585; H01M 10/0587; H01M 50/609;** H01M 2300/0085; H01M 2300/0094; Y02E 60/10

(86) International application number:
PCT/CN2023/097520

(87) International publication number:
WO 2024/243875 (05.12.2024 Gazette 2024/49)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicant: **Contemporary Amperex Technology Co., Limited**
**Ningde, Fujian 352100 (CN)**

(72) Inventors:
- **CHEN, Xingbu**
  **Ningde, Fujian 352100 (CN)**
- **LIU, Rundie**
  **Ningde, Fujian 352100 (CN)**
- **WU, Lili**
  **Ningde, Fujian 352100 (CN)**
- **SUN, Xin**
  **Ningde, Fujian 352100 (CN)**
- **YE, Yonghuang**
  **Ningde, Fujian 352100 (CN)**
- **JIN, Haizu**
  **Ningde, Fujian 352100 (CN)**

(74) Representative: **Ziebig Hengelhaupt Intellectual Property Attorneys Patentanwaltskanzlei PartGmbB**
**Leipziger Straße 49**
**10117 Berlin (DE)**

# (54) GEL ELECTROLYTE BATTERY, ELECTRIC DEVICE, AND PREPARATION METHOD

(57) The present application provides a gel electrolyte battery, comprising gel electrolytes, wherein the gel electrolytes comprise a first gel electrolyte (410) and a second gel electrolyte (420), the first gel electrolyte is located in at least part of at least one side surface of at least one electrode sheet (100), and the second gel electrolyte is located in the direction of the first gel electrolyte distant from the electrode sheet; the electrode sheet is a positive electrode sheet or a negative electrode sheet.

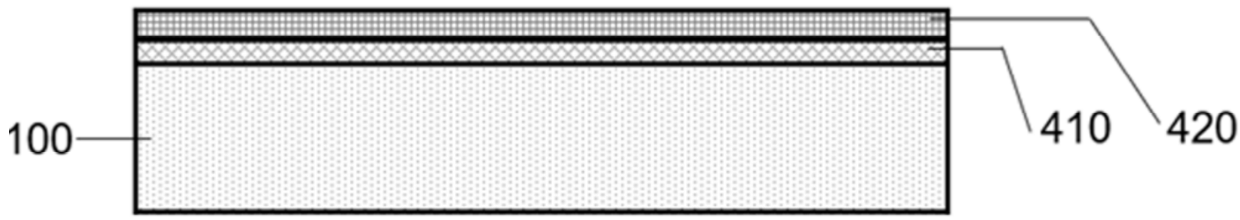


FIG. 1

EP 4 645 501 A1

## Description

### TECHNICAL FIELD

The present application relates to the technical field of secondary batteries, and particularly relates to a gel electrolyte battery, an electrical apparatus and a preparation method.

### BACKGROUND

The statements provided here are intended solely to offer background information relevant to the present application and do not necessarily constitute the prior art.

With the popularization and development of various electronic products such as smart phones, tablets, smart wearables, electric tools and electric vehicles, the application of secondary batteries has involved all aspects of people's daily lives. Therefore, the safety issue of secondary batteries has become increasingly important, and it is necessary to improve the safety of secondary batteries while maintaining good battery performance such as capacity.

### SUMMARY OF THE INVENTION

In view of the above problem, the present application provides a gel electrolyte battery, an electrical apparatus, and a preparation method. The gel electrolyte contained in the gel electrolyte battery has a special cross-linking degree distribution pattern, which can give the battery higher rigidity and improve battery safety while maintaining good battery capacity.

In a first aspect, the present application provides a gel electrolyte battery, comprising an electrode assembly and an electrolyte; the electrode assembly comprises a positive electrode sheet and a negative electrode sheet; the electrolyte comprises gel electrolytes, and the gel electrolytes comprise a first gel electrolyte and a second gel electrolyte; the first gel electrolyte is located on at least part of at least one side surface of at least one electrode sheet, and the second gel electrolyte is located on the side of the first gel electrolyte distant from the electrode sheet; the electrode sheet is the positive electrode sheet or the negative electrode sheet;
the cross-linking degree of the gel part of the second gel electrolyte is higher than the cross-linking degree of the gel part of the first gel electrolyte.

In the aforementioned gel electrolyte battery, the gel electrolyte in the battery cell can improve the rigidity of the secondary battery. Furthermore, a combination distribution pattern of the first gel electrolyte with a low cross-linking degree (located on at least one side surface of the electrode sheet) and the second gel electrolyte with a high cross-linking degree and high rigidity (separated from the surface of the electrode sheet by the first gel electrolyte) is formed in sequence on the surface of the electrode sheet. On the one hand, the surface of the electrode sheet with a low cross-linking degree can absorb and swell with more liquid electrolyte, thereby having better infiltration in the pores of and on the surface of the electrode sheet, which is more conducive to electrical properties such as capacity. On the other hand, the design of high cross-linking degree distant from the electrode surface can give the battery higher rigidity, further enhance the battery's ability to resist deformation during use, thereby significantly improving the safety performance of the battery cell.

In a first aspect, the present application further provides another gel electrolyte battery, comprising an electrode assembly and an electrolyte; the electrode assembly comprises a positive electrode sheet and a negative electrode sheet; the electrolyte comprises gel electrolytes, and the gel electrolytes comprise a first gel electrolyte and a second gel electrolyte;

> the first gel electrolyte is located in at least part of a first region and a second region: wherein the first region is a surface region of the negative electrode sheet, and the second region is a surface region of the positive electrode sheet;
> the second gel electrolyte is located in at least part of an opposite space between the positive electrode sheet and the negative electrode sheet;
> the cross-linking degree of the gel part of the second gel electrolyte is higher than the cross-linking degree of the gel part of the first gel electrolyte.

In the aforementioned gel electrolyte battery, the gel electrolyte in the battery cell can improve the rigidity of the secondary battery. Furthermore, the first gel electrolyte with a low cross-linking degree is arranged on the surface of the electrode sheet, and the second gel electrolyte (high rigidity layer) with a high cross-linking degree is arranged in at least part of the opposite space between the positive and negative electrode sheets, so that the gel electrolyte is controlled to have the synergistic combination distribution of low cross-linking on the surface of the electrode sheet and high cross-linking in the opposite space between the electrode sheets. On the one hand, the surface of the electrode sheet with a low cross-linking degree can absorb and swell with more liquid electrolyte, thereby having better infiltration in the pores of and

on the surface of the electrode sheet, which is more conducive to electrical properties such as capacity. On the other hand, the design of high cross-linking degree in the opposite space between the electrode sheets can give the battery higher rigidity, further enhance the battery's ability to resist deformation during use, thereby significantly improving the safety performance of the battery cell.

In some embodiments, the mass ratio $m_{1/2}$ of the gel part of the first gel electrolyte to the gel part of the second gel electrolyte is (0.2-3):1, optionally (0.5-1):1, further optionally (0.79-1):1, and still further optionally 1:1.

In some embodiments, the volume ratio $v_{1/2}$ of the gel part of the first gel electrolyte to the gel part of the second gel electrolyte is (0.2-3):1, optionally (0.5-1):1, further optionally (0.79-1):1, and still further optionally 1:1.

In some embodiments, the cross-linking degree ratio $CX_{1/2}$ of the gel part of the first gel electrolyte to the gel part of the second gel electrolyte is 1:(1-5), optionally 1:(1.1-2.0), further optionally 1:(1.5-2.0), and still further optionally 1:(1.8-2.0).

In some embodiments, the swelling rate ratio $Q_{1/2}$ of the gel part of the first gel electrolyte to the gel part of the second gel electrolyte is (1-4):1, optionally (1.3-2.5):1, further optionally (1.65-2.0):1, and still further optionally (1.8-2.0):1.

In some embodiments, the thermal decomposition temperature ratio $Td_{1/2}$ of the gel part of the first gel electrolyte to the gel part of the second gel electrolyte is 1:(1-4), optionally 1:(1.1-2.0), further optionally 1:(1.45-2.0), and still further optionally 1:(1.6-1.8).

The lower $m_{1/2}$ and $v_{1/2}$ are, the higher the content proportion of the second gel electrolyte is, which is more beneficial to improving the rigidity of the battery. However, if one or both of $m_{1/2}$ and $v_{1/2}$ is on the low side, the content of the second gel electrolyte will be on the high side, which may affect the filling space of the active material inside the battery and may reduce the energy density, or may cause the filling degree of the battery cell to be on the high side and the internal stress to increase, possibly leading to performance deterioration. On the other hand, if the content proportion of the first gel electrolyte is on the low side, it may cause insufficient coverage of the first gel electrolyte with a low cross-linking degree on the electrode surface, which may lead to poor electrode sheet infiltration effect and deterioration of electrical properties such as capacity. The lower $CX_{1/2}$, the higher $Q_{1/2}$ or the lower $Td_{1/2}$, the denser the network structure of the second gel electrolyte is, which is more conducive to providing a higher modulus and thus more beneficial to improving the rigidity of the battery. However, it may affect the electrolyte solution retention between the electrode sheets, thereby causing the battery performance to deteriorate after long-term cycling. By adjusting one or more parameters among mass ratio $m_{1/2}$, volume ratio $v_{1/2}$, cross-linking degree ratio $CX_{1/2}$, swelling rate ratio $Q_{1/2}$ and thermal decomposition temperature ratio $Td_{1/2}$, the proportions of the first gel electrolyte and the second gel electrolyte can be controlled within a more appropriate range, and the synergistic combination between low cross-linking on the surface of the electrode sheet and high cross-linking in the opposite space between the electrode sheets can be better coordinated, thereby better optimizing the comprehensive performance of the gel electrolyte battery in terms of capacity, battery rigidity and safety.

In some embodiments, the first gel electrolyte and the second gel electrolyte both comprise an electrolyte salt; the ratio $f_{1/2}$ of the electrolyte salt mass proportion f1 in the first gel electrolyte to the electrolyte salt mass proportion f2 in the second gel electrolyte is 1.5:1 to 1:1.5, optionally 1:(0.7-1.5), further optionally 1:(0.8-1), and still further optionally 1:(0.8-0.95).

In some embodiments, the gel electrolyte battery satisfies one or more of the following features:

the mass proportion f1 of the electrolyte salt in the first gel electrolyte is 0.7-1.2 mol/L, and optionally 0.8-1.2 mol/L;
the mass proportion f2 of the electrolyte salt in the second gel electrolyte is 0.7-1.2 mol/L, and optionally 0.8-1.2 mol/L.

The higher the ratio $f_{1/2}$ of the mass proportion f1 of the electrolyte salt in the first gel electrolyte to the mass proportion f2 of the electrolyte salt in the second gel electrolyte, the higher the electrolyte salt concentration on the surface of the electrode sheet is, which helps more solvent to participate in solvation coordination, improves solvent stability, reduces side reaction consumption, and improves cycling performance. However, the large concentration difference of electrolyte salt between the first gel electrolyte and the second gel electrolyte may cause a mismatch in ion diffusion rate between the first gel electrolyte and the second gel electrolyte, which may affect the capacity and rate performance. Furthermore, by controlling the concentration of the electrolyte salt in the first gel electrolyte and/or the second gel electrolyte within a certain range, the solvent stability and ion diffusion rate requirements can be better balanced, thereby improving the battery's comprehensive performance such as cycling performance, capacity, and rate performance.

In some embodiments, at least part of the first gel electrolyte is located between the second gel electrolyte and the positive electrode sheet, and at least part of the first gel electrolyte is also located between the second gel electrolyte and the negative electrode sheet.

At this time, the first gel electrolyte is arranged on the two opposite surfaces of at least one pair of positive electrode sheet and negative electrode sheet and forms two opposite faces, and the second gel electrolyte is arranged between the two opposite faces formed by the first gel electrolyte.

At this time, the cross-linking degree distribution of "positive electrode sheet surface-low cross-linking-high cross-linking region-low cross-linking-high cross-linking-negative electrode sheet surface" in which there is an electrode

sheet surface low cross-linking region between at least one pair of oppositely arranged positive electrode sheet and negative electrode sheet and a high cross-linking region is arranged between the two opposite surfaces of the low cross-linking region can better optimize the comprehensive performance of the gel electrolyte battery in terms of capacity, battery rigidity and safety.

In some embodiments, the gel electrolyte further comprises a third gel electrolyte, and the third gel electrolyte is located in at least part of a third region and a fourth region; wherein the third region is a gap region between negative electrode active materials in the negative electrode sheet, and the fourth region is a gap region between positive electrode active materials in the positive electrode sheet.

The gel electrolyte in the gel electrolyte battery can also be distributed in the gap region in the active material layer of the electrode sheet, which helps to maintain the ion transport in the pores inside the electrode sheet and promote the electrical contact and capacity of the active material particles.

In some embodiments, the mass ratio $m_{1/3}$ of the gel part of the first gel electrolyte to the gel part of the third gel electrolyte is 1:(4-10), optionally 1:(4-8), and further optionally 1:(4-6).

By adjusting the mass ratio of the gel part of the first gel electrolyte to the gel part of the third gel electrolyte, the distribution ratio of the gel electrolyte on the surface of the electrode sheet and inside the electrode sheet can be directly regulated, and the distribution ratio of the gel electrolyte outside the electrode sheet and inside the electrode sheet can be indirectly regulated, so that both the inside and the surface of the electrode sheet have an appropriate amount of gel electrolyte, and then a suitable infiltration buffer layer is provided between the active material layer of the electrode sheet and the high rigidity layer between the electrode sheets, which is conducive to achieving good capacity of the battery.

In some embodiments, at least part of the second gel electrolyte is in contact with the first gel electrolyte in at least part of the first region and the second region.

The gel electrolyte in the opposite space between the electrode sheets can be brought into direct contact with the gel electrolyte on the surface of the electrode sheet, which is conductive to maintaining better ion transport and lower solution impedance during the use of the battery, thereby achieving better battery performance.

In some embodiments, the electrode assembly further comprises a separator, the separator is arranged between the positive electrode sheet and the negative electrode sheet, and the second gel electrolyte is located outside the separator.

In some embodiments, the gel electrolyte further comprises a fourth gel electrolyte, and the fourth gel electrolyte is located in the inner pores of the separator.

In some embodiments, the mass ratio $m_{2/4}$ of the gel part of the second gel electrolyte to the gel part of the fourth gel electrolyte is (4-9):1, optionally (5-9):1, and further optionally (6-8):1.

The inner pores of the separator may contain the gel electrolyte, which is more conducive to improving the strength of the separator, inhibiting the thermal shrinkage of the separator, maintaining ion conductivity while improving battery safety. By adjusting the ratio of the content of the gel electrolyte in the opposite space between the electrode sheets to the content inside the separator, the gel electrolyte content in the separator can be reasonably controlled to better optimize the above-mentioned effects.

In some embodiments, the gel electrolyte battery further comprises a case, and the electrode assembly and the electrolyte are both located inside the case;

the electrolyte further comprises or does not comprise a fifth gel electrolyte, and comprises or does not comprise a sixth gel electrolyte, wherein the fifth gel electrolyte is located on at least part of the outermost surface of the electrode assembly, the sixth gel electrolyte is located in at least part of the opposite space between the outermost surface of the electrode assembly and the inner wall of the case, and the cross-linking degree of the sixth gel electrolyte is higher than the cross-linking degree of the fifth gel electrolyte.

The gel electrolyte can be arranged between the electrode assembly and the battery case to provide rigid protection for the periphery of the electrode assembly and further improve the overall rigidity of the gel electrolyte battery. The design of combining the low cross-linking degree of the outermost surface of the electrode assembly with the high cross-linking degree between the electrode assembly and the case can be formed simultaneously with the formation of the first gel electrolyte and the second gel electrolyte.

In some embodiments, the ratio of the sum of the gel part mass m5 of the fifth gel electrolyte and the gel part mass m6 of the sixth gel electrolyte to the sum of the gel part mass m1 of the first gel electrolyte and the gel part mass m2 of the second gel electrolyte satisfies $0 \leq (m5+m6)/(m1+m2) \leq 12.5\%$, optionally satisfies $0 \leq (m5+m6)/(m1+m2) \leq 10\%$, further optionally satisfies $4\% \leq (m5+m6)/(m1+m2) \leq 12.5\%$, still further optionally satisfies $5\% \leq (m5+m6)/(m1+m2) \leq 12.5\%$, and still further optionally satisfies $5\% \leq (m5+m6)/(m1+m2) \leq 10\%$.

By controlling the ratio of the gel electrolyte outside the electrode assembly (comprising the fifth gel electrolyte on the outermost surface of the electrode assembly and the sixth gel electrolyte between the electrode assembly and the case, corresponding to m5+m6) to the gel electrolyte outside the electrode sheet in the electrode assembly region (comprising the first gel electrolyte on the surface of the electrode sheet and the second gel electrolyte in at least part of the opposite space between the electrode sheets, corresponding to m1+m2), the gel electrolyte outside the electrode

assembly can be controlled within a certain range, which can not only provide certain rigid protection for the periphery of the electrode assembly, but also provide sufficient gel electrolyte in the region where the electrode assembly is located. This maintains good battery capacity performance while providing higher battery rigidity, and can also play a role in effectively transporting active ions in the charge and discharge cycle of the battery.

In some embodiments, the electrolyte further comprises or does not comprise a liquid electrolyte;
optionally, the mass ratio of the gel part of the gel electrolyte to the liquid electrolyte is 1:(0-0.05), further optionally 1:(0.01-0.05), and further optionally 1:(0.02-0.04).

While introducing a gel electrolyte into gel electrolyte batteries to improve the overall rigidity of the battery, the traditional liquid electrolyte can be retained. At this time, the interface infiltration contact between the active material and the gel electrolyte can be improved, and the electrolyte solution consumption during the cycle can be replenished, thereby improving the long-term cycling performance of the battery.

In some embodiments, the positive electrode sheet comprises a positive electrode active material layer, the positive electrode active material layer comprises a positive electrode active material, and the positive electrode active material comprises a lithium ion material;

optionally, the gel electrolyte comprises a lithium salt; further optionally, the electrolyte salts in the first gel electrolyte and the second gel electrolyte each independently comprise a lithium salt;
optionally, the electrolyte comprises a lithium salt in a liquid electrolyte.

When the active ions in the gel electrolyte battery comprise lithium ions, the electrolyte salts in the gel electrolyte and the liquid electrolyte may each independently comprise lithium salts that are more compatible with the active ions, so as to better play the role of transporting active ions. Furthermore, the electrolyte salts in the first gel electrolyte and the second gel electrolyte may each independently comprise lithium salts, which helps to better play the role of transporting active ions.

In a second aspect, the present application provides a preparation method for a gel electrolyte battery, which comprises the following steps:

mounting an electrode assembly inside a case, wherein the electrode assembly comprises a positive electrode sheet, a separator and a negative electrode sheet, and the separator is arranged between the positive electrode sheet and the negative electrode sheet;
injecting a first injection material into the case, wherein the first injection material comprises a first electrolyte salt, a first polymerizable monomer and a first solvent;
performing formation;
subjecting the first injection material to curing reaction to form a first gel electrolyte on at least part of the surface of the positive electrode sheet and the negative electrode sheet;
injecting a second injection material into the case, wherein the second injection material comprises a second electrolyte salt, a second polymerizable monomer and a second solvent;
subjecting the second injection material to curing reaction to form a second gel electrolyte in at least part of the opposite space between the positive electrode sheet and the negative electrode sheet; wherein the cross-linking degree of the gel part of the second gel electrolyte is higher than the cross-linking degree of the gel part of the first gel electrolyte.

By adding polymerizable monomers to the electrolyte solution raw material, a gel electrolyte can be formed through curing reaction, and the liquid raw material of the electrolyte is further injected and cured in steps. After the first injection, a first gel electrolyte can be formed on the surface of the electrode sheet through formation and the first curing. Then, the second injection and curing are performed to form a second gel electrolyte in at least part of the opposite space between the electrode sheets (or the second gel electrolyte is formed on the side of the first gel electrolyte distant from the surface of the electrode sheet). By controlling the cross-linking degree of the gel electrolyte formed in different curing steps, the gel electrolyte can form gradient and synergistically coordinated cross-linking degrees at different positions of the battery. By controlling the cross-linking degree of the gel part of the second gel electrolyte to be higher than the cross-linking degree of the gel part of the first gel electrolyte, the gel electrolyte battery of the first aspect of the present application can be prepared, wherein the gel electrolyte can have synergistic combination distribution of low cross-linking on the surface of the electrode sheet and high cross-linking in the opposite space between the electrode sheets. On the one hand, the surface of the electrode sheet with a low cross-linking degree can absorb and swell with more liquid electrolyte, thereby having better infiltration in the pores of and on the surface of the electrode sheet, which is more conducive to electrical properties such as capacity. On the other hand, the design of high cross-linking degree in the opposite space between the electrode sheets can give the battery higher rigidity, further enhance the ability of the battery to resist deformation during use, thereby significantly improving the safety performance of the battery cell.

In some embodiments, the mass concentration of the first polymerizable monomer in the first injection material is recorded as c1, and the mass concentration of the second polymerizable monomer in the second injection material is recorded as c2, wherein c1<c2;

optionally, the mass concentration of the first polymerizable monomer in the first injection material is 2% to 6%, and further optionally 3% to 5%;
and optionally, the mass concentration of the second polymerizable monomer in the second injection material is 5% to 10%, and further optionally 8% to 10%.

In some embodiments, the mass ratio of the first injection material to the second injection material is (1-9):1; optionally, the mass ratio of the first injection material to the second injection material is (2-6):1.

The synergistic design of low cross-linking on the surface of the electrode sheet and high cross-linking in the opposite space between the electrode sheets in the prepared gel electrolyte battery, or the design of sequentially arranging low cross-linking region and high cross-linking region on the surface of the electrode sheet, can be achieved by controlling the concentration (such as mass concentration c2) of the polymerizable monomer in the injection material during the second injection to be higher than the concentration (such as mass concentration c1) of the polymerizable monomer in the injection material during the first injection. Furthermore, the polymerizable monomer concentration during the two injections can be adjusted to be within a more appropriate range, and the mass ratio between the two injections can also be adjusted, so as to better control the gel electrolyte in the battery to have more appropriate gradient distribution and better balance the comprehensive performance of battery capacity and battery rigidity improvement.

In some embodiments, the gel electrolyte battery prepared by the preparation method is as defined in the first aspect of the present application.

In a third aspect, the present application provide an electrical apparatus, which comprises at least one of the gel electrolyte battery according to the first aspect of the present application and the gel electrolyte battery prepared by the preparation method according to the second aspect of the present application.

The details of one or more embodiments of the present application are set forth in the accompanying drawings and the description below. Other features, objects and advantages of the present application will be apparent from the description and drawings, and from the claims.

## DESCRIPTION OF DRAWINGS

In order to better describe and illustrate embodiments or examples of the applications disclosed herein, reference may be made to one or more drawings. Additional details or examples used to describe the drawings should not be construed as limiting the scope of any one of the disclosed applications, the presently described embodiments or examples, and the best modes presently understood for these applications. Moreover, in all of the drawings, the same components are indicated by the same reference numerals. It should also be noted that the drawings are all drawn in a simplified form and are only used to conveniently and clearly assist in explaining the present invention. Various dimensions of each component shown in the drawings are arbitrarily shown and may be accurate or may not be drawn to scale. For example, in order to make the illustration clearer, the sizes of components are appropriately exaggerated in some places in the drawings. Unless otherwise specified, the components in the drawings are not drawn to scale. The present invention does not limit every size of every component.

In the drawings:

FIG. 1 is a schematic diagram of the distribution of gel electrolytes in a gel electrolyte battery according to an embodiment of the present application, wherein an electrode sheet 100, a first gel electrolyte 410 located on one side surface of the electrode sheet 100, and a second gel electrolyte 420 located in the direction of the first gel electrolyte 410 distant from the electrode sheet 100 are shown; the first gel electrolyte is located between the second gel electrolyte and an electrode sheet;

FIG. 2 is a schematic diagram where gel electrolytes outside an electrode sheet have gradient distribution of cross-linking degree in an embodiment of the present application, showing a side of an electrode sheet as a non-limiting example, wherein an electrode sheet 100, a first gel electrolyte 410 located on both side surfaces of the electrode sheet, and a second gel electrolyte 420 located on the side of the first gel electrolyte 410 distant from the electrode sheet 100 are shown; the second gel electrolyte 420 is located on both sides of the electrode sheet 100;

FIG. 3 is a schematic diagram where gel electrolytes in an electrode assembly region have gradient distribution of cross-linking degree in an embodiment of the present application, which shows an electrode assembly comprising a positive electrode sheet 110, a negative electrode sheet 120 and a separator 200, wherein the separator 200 is located between the positive electrode sheet 110 and the negative electrode sheet 120; and also shows a first gel electrolyte 410 located on the two opposite surfaces of the positive electrode sheet 110 and the negative electrode sheet 120, and

a second gel electrolyte 420 located in at least part of the opposite space between the positive electrode sheet 110 and the negative electrode sheet 120, wherein the second gel electrolyte 420 is located outside the separator 200; in this embodiment, both the second gel electrolyte 420 and the first gel electrolyte 410 located at least between the second gel electrolyte 420 and the positive electrode sheet 110 and at least between the second gel electrolyte 420 and the negative electrode sheet 120 are comprised between the oppositely arranged positive electrode sheet 110 and the negative electrode sheet 120;

FIG. 4 is a schematic diagram where gel electrolytes are distributed outside and in the internal gap region of an electrode sheet in an embodiment of the present application, which shows an electrode sheet and a first gel electrolyte 410 located on both side surfaces of the electrode sheet, and a second gel electrolyte 420 distributed on both sides of the electrode sheet and located on both sides of the first gel electrolyte 410 and distant from the electrode sheet, wherein the electrode sheet comprises a current collector 101, an active material layer 103 located on both sides of the current collector 101, the active material layer 103 comprises a granular active material 1031, there is a gap region between the granular active materials 1031 of the active material layer 103, and there is a third gel electrolyte 430 in the gap region;

FIG. 5 is a schematic diagram where gel electrolytes are distributed both outside a separator and in the inner pores of the separator in an embodiment of the present application, which shows a positive electrode sheet 110, a negative electrode sheet 120 and a separator 200 located between the positive electrode sheet 110 and the negative electrode sheet 120, wherein a first gel electrolyte 410 is present on the two opposite surfaces of the positive electrode sheet 110 and the negative electrode sheet 120, and a second gel electrolyte 420 is present in at least part of the opposite space between the positive electrode sheet 110 and the negative electrode sheet 120, the second gel electrolyte 420 is located in at least part of the opposite space between the two opposite surfaces of the first gel electrolyte 410 distant from the positive electrode sheet 110 and distant from the negative electrode sheet 120, and the second gel electrolyte 420 is located outside the separator 200; the separator 200 comprises separator particles 201 and a fourth gel electrolyte 440 distributed in at least part of the pores between the separator particles 201; in this embodiment, at least part of the first gel electrolyte 410 is located between the second gel electrolyte 420 and the positive electrode sheet 110, and at least part of the first gel electrolyte is also located between the second gel electrolyte 420 and the negative electrode sheet 120;

FIG. 6 is a longitudinal cross-sectional view (left) and a partial enlarged longitudinal cross-sectional view (right) of a gel electrolyte battery in an embodiment of the present application. In the longitudinal cross-sectional view at the left side, the four regions separated by vertical solid lines represent two bare battery cells assembled by a winding structure, and the two bare battery cells are connected in parallel to the top cover through an adapter plate on the top; the partial enlarged longitudinal cross-sectional view at the right side illustrates the stacking of the positive and negative electrode sheets and the separator in the bare battery cell, and shows in detail the distribution of the gel electrolyte in the case 51. The gel electrolyte battery 5 comprises a case 51 and an electrode assembly, and the electrode assembly comprises a plurality of positive electrode sheets 110, a plurality of negative electrode sheets 120, and a plurality of separators 200 arranged between any pairs of opposite positive electrode sheets 110 and negative electrode sheets 120. A first gel electrolyte 410 is present on the two opposite surfaces of at least one pair of opposite positive electrode sheet 110 and negative electrode sheet 120, and a second gel electrolyte 420 is present on at least part of the opposite space between the aforementioned pair of opposite positive electrode sheet 110 and negative electrode sheet 120. The second gel electrolyte 420 is located in at least part of the opposite space between the two opposite surfaces of the first gel electrolyte 410 distant from the positive electrode sheet 110 and distant from the negative electrode sheet 120, and the second gel electrolyte 420 is located outside the corresponding separator 200 and between the two opposite surfaces of the first gel electrolyte 410. A fifth gel electrolyte 450 is present on the outermost surface of the electrode assembly, and a sixth gel electrolyte 460 is present in the region between the electrode assembly and the case 51; the sixth gel electrolyte is located in the region of the fifth gel electrolyte 450 distant from the electrode assembly;

FIG. 7 is a schematic diagram of a gel electrolyte battery according to an embodiment of the present application;

FIG. 8 is an exploded view of the gel electrolyte battery according to an embodiment of the present application as shown in FIG. 7.

FIG. 9 is a schematic diagram of an electrical apparatus in which a gel electrolyte battery is used as a power source according to an embodiment of the present application.

Description of reference numerals:

100 Electrode sheet, 101 Current collector, 103 Active material layer, 1031 Active material (or active particles), 110 Positive electrode sheet, 120 Negative electrode sheet, 200 Separator, 201 Separator particles, 410 First gel electrolyte, 420 Second gel electrolyte, 430 Third gel electrolyte, 440 Fourth gel electrolyte, 450 Fifth gel electrolyte,

and 460 Sixth gel electrolyte;
5 Gel electrolyte battery, 51 Case, 52 Electrode assembly, 53 Cover plate, and 6 Electrical apparatus.

## DESCRIPTION OF EMBODIMENTS

Hereinafter, some embodiments of the gel electrolyte battery, the electrical apparatus and the preparation method of the present application are described and disclosed in detail with reference to the drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.
"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are further listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when an integer with a parameter of $\geq 2$ is expressed, it is equivalent to listing that the parameter is an integer 2, 3, 4, 5, 6, 7, 8, 9, 10, 11, 12, etc. For example, when it is described that a parameter is an integer selected from "2-10", it is equivalent to listing the integers 2, 3, 4, 5, 6, 7, 8, 9 and 10.
Unless otherwise particularly stated, all embodiments and optional embodiments of the present application may be combined with each other to form new technical solutions.
Reference herein to "an embodiment" means that a particular feature, structure, or characteristic described in connection with the embodiment can be comprised in at least one example or embodiment of the present application. The appearance of this phrase in various places in the specification does not necessarily refer to the same embodiment, nor is it a separate or alternative embodiment that is mutually exclusive with other embodiments. Those skilled in the art understand, both explicitly and implicitly, that the embodiments described herein may be combined with other embodiments. References to "embodiments" herein have a similar understanding.
Unless otherwise particularly stated, all steps in the present application may be performed sequentially or may be performed randomly, and are preferably performed sequentially. For example, the method comprises steps (a) and (b), meaning that the method may comprise steps (a) and (b) performed sequentially, or may comprise steps (b) and (a) performed sequentially. For example, the reference to the method may further comprise step (c), which means that step (c) may be added to the method in any order, for example, the method may comprise steps (a), (b) and (c), or may comprise steps (a), (c) and (b), or may comprise steps (c), (a) and (b), and so on.
Unless otherwise particularly stated, the terms "including", "containing" and "comprising" mentioned in the present application may be open-ended, or may be closed-ended. For example, the "including" and "comprising" may indicate that it may further include or comprise other members or timing features not listed, and it may include or comprise only the listed members or timing features. Members include materials or components, structures, elements, instruments, etc.; non-limiting examples of timing features include actions, conditions for the occurrence of actions, timing, states, etc.
Unless otherwise specifically stated, the term "or" is inclusive in the present application. For example, the phrase "A or B" means "A, B alone, or both A and B." Furthermore, the condition "A or B" is satisfied under any one of the following conditions: A is true (or present) and B is false (or absent); A is false (or absent) and B is true (or present); or both A and B are true (or present).
In the present application, unless otherwise specified, A (such as B) means that B is a non-limiting example of A, and it can be understood that A is not limited to B.
In the present application, unless otherwise specified, the term "and/or" is merely a term used to describe the association relationship of associated objects, indicating that three types of relationships may exist. The features or solutions corresponding to "and/or" include any one of two or more relevant listed items, and also include any and all combinations of the relevant listed items, wherein any and all combinations include any two relevant listed items, any more relevant listed items, or a combination of all relevant listed items. For example, "A and/or B" means the group consisting of A, B, and "a combination of A and B". Among others, "comprising A and/or B" can mean "comprising A, comprising B, and comprising A and B", and can also mean "comprising A, comprising B, or comprising A and B", which can be appropriately understood according to the sentence in which it is located.

In the present application, "a plurality of", "multiple", etc., unless otherwise specified, refers to a quantity greater than 2 or equal to 2. For example, "one or more" means one or more than two. It can be understood that when referring to "any number of" items, it refers to any suitable combination of multiple items, that is, the "any number of' items are combined in a manner that does not conflict and can implement the present application.

The terms "combination thereof", "any combination thereof", "any way of combination thereof" and the like used in the present application include all suitable combinations of any two or more of the listed items.

In the present application, the "suitable" mentioned in "suitable combination", "suitable way", "any suitable way", etc. shall be based on the technical solution that can implement the present application.

In the present application, "preferred", "better", "preferable" and "appropriate" are merely used to describe embodiments or examples with better effects. It should be understood that they do not constitute limitations on the scope of protection of the present application. If there are multiple "preferred" in a technical solution, unless otherwise specified and there is no contradiction or mutual restriction, each "preferred" is independent.

In the present application, "optionally" and "optional" mean that it can be either present or absent, that is, any one of the two parallel options of "present" or "absent". If there are multiple "optional" in a technical solution, unless otherwise specified and there is no contradiction or mutual restriction, each "optional" is independent.

In the present application, "further", "still further", "particularly" and the like are used for descriptive purposes to indicate differences in content, but should not be construed as limiting the scope of protection of the present application.

In the present application, the terms "first", "second", "third", "fourth", etc. in "first aspect", "second aspect", "third aspect", "fourth aspect", etc. are used for descriptive purposes only and cannot be understood as indicating or implying relative importance or quantity, nor can they be understood as implicitly indicating the importance or quantity of the indicated technical features. Moreover, "first", "second", "third", "fourth", etc. are only used for the purpose of non-exhaustive enumeration and description, and it should be understood that they do not constitute a closed limitation on quantity.

In the present application, the term "room temperature" or "normal temperature" generally refers to 4°C to 35°C, and may refer to 20°C $\pm$ 5°C. In some embodiments of the present application, room temperature or normal temperature refers to 20°C to 30°C, for example 25°C.

In the present application, when referring to the unit of a data range, if there is a unit only after the right endpoint, it means that the units of the left endpoint and the right endpoint are the same. For example, 3 to 5 h or 3-5 h means that the units of the left endpoint "3" and the right endpoint "5" are both h (hour).

The weight of the relevant components mentioned in the description of embodiments of the present application may not only refer to the content of each component, but also indicate the proportional relationship in weight between the components. Therefore, as long as the content of the relevant components in the description of embodiments of the present application is proportionally enlarged or reduced, it is within the scope disclosed in the description of embodiments of the present application. Furthermore, the weight in the description of embodiments of the present application may be in $\mu$g, mg, g, kg, or other mass units known in the chemical industry.

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are only for the purpose of facilitating and simplifying the descriptions of the embodiments of the present application instead of indicating or implying that apparatuses or elements indicated must have particular orientations, and be constructed and operated in the particular orientations, so that these terms are not construed as limiting the embodiments of the present application. In addition, when understood in conjunction with the drawings, it can be understood as being based on the orientation or positional relationship shown in the drawings.

In the present application, unless otherwise specified, "a pair of opposite positive electrode sheet and negative electrode sheet" or "a pair of oppositely arranged positive electrode sheet and negative electrode sheet" means that an opposite space between the pair of opposite positive electrode sheet and negative electrode sheet is formed on one side surface of the positive electrode sheet and one side surface of the negative electrode sheet, and there are no other electrode sheets in the opposite space, but an separator is usually provided.

In the present application, "low cross-linking" means "low cross-linking degree", and "high cross-linking" means high cross-linking degree.

In the present application, the phrases "the first gel electrolyte is located at the surface of the electrode sheet" and "the first gel electrolyte is located on the surface of the electrode sheet" have the same meaning. Unless otherwise specified, at least part of the first gel electrolyte directly covers the surface of the electrode sheet.

In the present application, the phrase "A is located on a side of B" only indicates the position direction of A relative to B, and A and B may not be in direct contact.

During use, secondary batteries may be accidentally subjected to impact, stress, etc., which may cause deformation of the secondary batteries and result in damage, breakage, disposition, etc. of the internal components of the battery, which will not only affect the service life of the secondary batteries, but may also cause battery short circuit

and electric leakage, affecting the safety of the secondary batteries. By introducing a gel electrolyte into the electrolyte of secondary batteries, the rigidity of the battery can be improved, and the impact resistance of the battery can be improved to a certain extent. However, the introduced gel electrolyte may affect the infiltration of the electrolyte into the electrode sheet, thereby affecting the transport, intercalation and deintercalation efficiency of active ions. It may also cause polarization on the surface of the electrode sheet, affecting the battery capacity and other electrical properties.

In view of the above-mentioned technical problems, **in a first aspect,** the present application provides a gel electrolyte battery, the gel electrolyte battery comprises at least one electrode sheet 100, a first gel electrolyte 410 located on at least one side surface of the electrode sheet 100, and a second gel electrolyte 420 located in the direction of the first gel electrolyte 410 distant from the electrode sheet 100; the cross-linking degree of the gel part of the second gel electrolyte 420 is higher than the cross-linking degree of the gel part of the first gel electrolyte 410. At this time, the first gel electrolyte is located between the second gel electrolyte and an electrode sheet. The electrode sheet may be a positive electrode sheet or a negative electrode sheet. Please refer to FIG. 1.

The second gel electrolyte 420 may be located on one side or both sides of the electrode sheet 100.

In an embodiment, there is a gel electrolyte battery having the gel electrolyte distribution pattern as shown in FIG. 2. The gel electrolyte battery comprises at least one electrode sheet 100, a first gel electrolyte 410 located on both side surfaces of the electrode sheet, and a second gel electrolyte 420 located on the side of the first gel electrolyte 410 distant from the electrode sheet 100; the second gel electrolyte 420 is located on both sides of the electrode sheet 100.

In the first aspect of the present application, another gel electrolyte battery is provided, which comprises a positive electrode sheet 110, a negative electrode sheet 120 and gel electrolytes; the gel electrolytes comprise a first gel electrolyte 410 located on at least part of the surface of the positive electrode sheet and the surface of the negative electrode sheet, and further comprises a second gel electrolyte 420 located in at least part of an opposite space between the positive electrode sheet and the negative electrode sheet; the cross-linking degree of the gel part of the second gel electrolyte is higher than the cross-linking degree of the gel part of the first gel electrolyte.

It can be understood that when gel electrolytes with different cross-linking degrees are arranged between a pair of oppositely arranged positive electrode sheet and negative electrode sheet, the first gel electrolyte and the second gel electrolyte can be easily distinguished. At this time, the first gel electrolyte is located between the second gel electrolyte and at least one electrode sheet, and the first gel electrolyte is distributed in at least part of the region between the second gel electrolyte and the positive electrode sheet and the region between the second gel electrolyte and the negative electrode sheet.

The aforementioned two gel electrolyte batteries both comprise gel electrolytes with a synergistic combination of high and low cross-linking degrees, which can give the battery higher rigidity and improve battery safety while maintaining good battery capacity.

In some embodiments, a gel electrolyte battery is provided, which comprises an electrode assembly and an electrolyte; the electrode assembly comprises a positive electrode sheet and a negative electrode sheet; the electrolyte comprises gel electrolytes, and the gel electrolytes comprise a first gel electrolyte and a second gel electrolyte; the first gel electrolyte is located on at least part of at least one side surface of at least one electrode sheet, and the second gel electrolyte is located on the side of the first gel electrolyte distant from the electrode sheet; the electrode sheet is the positive electrode sheet or the negative electrode sheet;
the cross-linking degree of the gel part of the second gel electrolyte is higher than the cross-linking degree of the gel part of the first gel electrolyte.

In the aforementioned gel electrolyte battery, the gel electrolyte in the battery cell can improve the rigidity of the secondary battery. Furthermore, a combination distribution pattern of the first gel electrolyte with a low cross-linking degree (located on at least one side surface of the electrode sheet) and the second gel electrolyte with a high cross-linking degree and high rigidity (separated from the surface of the electrode sheet by the first gel electrolyte) is formed in sequence on the surface of the electrode sheet. On the one hand, the surface of the electrode sheet with a low cross-linking degree can absorb and swell with more liquid electrolyte, thereby having better infiltration in the pores of and on the surface of the electrode sheet, which is more conducive to electrical properties such as capacity. On the other hand, the design of high cross-linking degree distant from the electrode surface can give the battery higher rigidity, further enhance the battery's ability to resist deformation during use, thereby significantly improving the safety performance of the battery cell.

In some embodiments, provided is another gel electrolyte battery, comprising an electrode assembly and an electrolyte; the electrode assembly comprises a positive electrode sheet and a negative electrode sheet; the electrolyte comprises gel electrolytes, and the gel electrolytes comprise a first gel electrolyte and a second gel electrolyte;

the first gel electrolyte is located in at least part of a first region and a second region: wherein the first region is a surface region of the negative electrode sheet, and the second region is a surface region of the positive electrode sheet;
the second gel electrolyte is located in at least part of an opposite space between the positive electrode sheet and the negative electrode sheet;
the cross-linking degree of the gel part of the second gel electrolyte is higher than the cross-linking degree of the gel

part of the first gel electrolyte.

In the aforementioned gel electrolyte battery, the gel electrolyte with gradient cross-linking degree distribution on the surface of the electrode sheet and between the electrode sheets can improve the rigidity of the secondary battery. Furthermore, the first gel electrolyte with a low cross-linking degree is arranged on the surface of the electrode sheet, and the second gel electrolyte (high rigidity layer) with a high cross-linking degree is arranged in at least part of the opposite space between the positive and negative electrode sheets, so that the gel electrolyte is controlled to have the synergistic combination distribution of low cross-linking on the surface of the electrode sheet and high cross-linking in the opposite space between the electrode sheets. On the one hand, the surface of the electrode sheet with a low cross-linking degree can absorb and swell with more liquid electrolyte, thereby having better infiltration in the pores of and on the surface of the electrode sheet, which is more conducive to electrical properties such as capacity. On the other hand, the design of high cross-linking degree in the opposite space between the electrode sheets can give the battery higher rigidity, further enhance the battery's ability to resist deformation during use, thereby significantly improving the safety performance of the battery cell.

The gel electrolyte battery provided in the first aspect of the present application is a secondary battery comprising gel electrolytes.

In the present application, unless otherwise specified, the electrode sheet can be a positive electrode sheet or a negative electrode sheet. The "active material" in the electrode sheet refers to a material that has the ability to reversibly intercalate and deintercalate active ions; since the active material is usually granular, it is also called "active particle". Unless otherwise specified, "negative electrode active material" refers to a material used in negative electrode sheets that has the ability to reversibly intercalate and deintercalate active ions, also known as negative electrode active material or negative electrode active particles; "positive electrode active material" refers to a material used in positive electrode sheets that has the ability to reversibly intercalate and deintercalate active ions, also known as positive electrode active material or positive electrode active particles. When the secondary battery is charged, the active ions are deintercalated from the positive electrode and intercalated into the negative electrode through the electrolyte; when the secondary battery is discharged, the active ions are deintercalated from the negative electrode and intercalated into the positive electrode. The active ions are not particularly limited, and may be lithium ions. When the active ions are mainly lithium ions, it is a lithium ion secondary battery.

In the present application, "active material" and "active substance" have the same meaning and can be used interchangeably. Active materials are generally in granular form and can also be called "active particles"; "positive electrode active substance" and "positive electrode active material" have the same meaning and can be used interchangeably; "negative electrode active substance" and "negative electrode active material" have the same meaning and can be used interchangeably.

In the present application, unless otherwise specified, the "active material layer" comprises at least one of the positive electrode active material layer of the positive electrode sheet and the negative electrode active material layer of the negative electrode sheet, and may indicate the positive electrode active material layer or the negative electrode active material layer depending on the detailed circumstances. It can be understood that the positive electrode active material layer contains positive electrode active materials, and the negative electrode active material layer contains negative electrode active materials.

The gel electrolyte battery provided in the first aspect of the present application comprises at least a positive electrode sheet, a negative electrode sheet and an electrolyte, and the electrolyte can play a role in conducting active ions between the positive electrode sheet and the negative electrode sheet. The electrolyte at least comprises gel electrolytes, and the gel electrolytes are distributed on at least part of the surface of at least one electrode sheet and in at least part of the opposite space between the positive electrode sheet and the negative electrode sheet. The gel electrolyte located on the surface of the electrode sheet is recorded as the first gel electrolyte, and the gel electrolyte located in at least part of the opposite space between the positive electrode sheet and the negative electrode sheet is recorded as the second gel electrolyte. The first gel electrolyte may be distributed on at least one side of the electrode sheet, and may be distributed on one side or both sides of the electrode sheet. The second gel electrolyte is distributed in at least part of the opposite space between at least one pair of oppositely arranged positive electrode sheet and negative electrode sheet. A separator may be arranged between the oppositely arranged positive electrode sheet and negative electrode sheet. In the present application, unless otherwise specified, the cross-linking degree of the gel part of the second gel electrolyte is higher than the cross-linking degree of the gel part of the first gel electrolyte.

In the context of the present application, in the "first gel electrolyte", "second gel electrolyte", "third gel electrolyte", "fourth gel electrolyte", "fifth gel electrolyte" and "sixth gel electrolyte", the terms "first", "second", "third", "fourth", "fifth" and "sixth" are used for descriptive purposes only and are not to be understood as indicating or implying relative importance or quantity, nor are they to be understood as implicitly indicating the importance or quantity of the indicated technical features.

In the present application, a "gel electrolyte" is a semi-solid electrolyte having the following characteristics: it

comprises a gel skeleton, a gelling solvent located in the gel skeleton, and an electrolyte salt dissolved in the gelling solvent. The gel skeleton is a cross-linked polymer with a three-dimensional network structure; the gelling solvent is bound in the grid of the gel skeleton and cannot flow freely, so that the electrolyte in the gel skeleton area is in a colloidal semi-solid state; the gelling solvent has certain continuous distribution in the gel skeleton, the electrolyte solvent in the gel electrolyte is dissolved in the gelling solvent, and with the restricted movement of the chain segments between the cross-linking points of the network structure, the electrolyte salt can conduct active ions. In addition, the molecular chain segments between adjacent cross-linking points in the gel skeleton still have a certain flexibility, which makes the network structure have not only a certain degree of support but also a certain elasticity. However, the chain segments between these cross -linking points are restricted between the corresponding nodes of the grid and cannot diffuse freely in the solvent like free molecules. Therefore, the gel electrolyte has both the solidity of the gel skeleton and the restricted fluidity of the gelling solvent in physical form, which is significantly different from traditional electrolyte solutions that can flow freely and have no fixed shape.

In the present application, "liquid electrolyte" is a liquid electrolyte, also called an electrolyte solution, which comprises an electrolyte salt and a solvent. The solvent can flow freely, and the electrolyte salt dissolved in the solvent can migrate freely. The liquid electrolyte as a whole can flow freely and has no fixed shape.

It is understood that the migration ability of the electrolyte salt in the gel electrolyte is lower than the migration ability of the electrolyte salt in the liquid electrolyte.

In the present application, "cross-linked polymer" has a well-known meaning in the field of polymer technology. It has a three-dimensional network structure and can swell to a certain extent in corresponding solvents, but will not dissolve. The extent of swelling depends on the cross-linking degree of the cross-linked polymer.

In the present application, unless otherwise specified, the "gel part of the gel electrolyte" refers to the gel skeleton portion of the gel electrolyte, excluding the solvent, electrolyte salt and other optional components in the gel electrolyte.

In the present application, "cross-linking degree" refers to the degree of cross-linking between molecular chains of a cross-linked polymer having a three-dimensional network structure. The nodes that make up the three-dimensional network structure are also the cross-linking points. The cross-linking degree can be characterized by one or more parameters including cross-linking point density $\rho$, effective chain average molecular weight M between cross-linking points, swelling degree, volume swelling degree, weight swelling rate, thermal decomposition temperature Td and glass transition temperature Tg.

Unless otherwise specified, the "cross-linking point density" may be denoted as $\rho$, which represents the fraction of cross-linked structural units to the total structural units, that is, the cross-linking probability of each structural unit. The higher the cross-linking point density, the higher the cross-linking degree.

Unless otherwise specified, the lower the effective chain average molecular weight M between the cross-linking points, that is, the shorter the molecular chain segments between the cross-linking points, the denser the distribution of the cross-linking points, and the higher the cross-linking degree.

Unless otherwise specified, "swelling degree" refers to the degree of swelling of a polymer, and can be expressed by the volume ratio or weight ratio before and after swelling, such as volume swelling degree and weight swelling rate. Unless otherwise specified, the volume swelling degree refers to the ratio of the volume of the polymer when it adsorbs solvent molecules and reaches swelling equilibrium to the volume before swelling. Unless otherwise specified, the weight swelling rate refers to the ratio of the weight of the polymer when it adsorbs solvent molecules and reaches swelling equilibrium to the dry weight before swelling.

In the present application, the "swelling rate" is measured by the gravimetric method and is numerically equal to the weight swelling rate unless otherwise specified.

When solvent molecules enter the three-dimensional network of the cross-linked polymer, they will cause the three-dimensional molecular network to stretch, causing the polymer to expand in volume and generate swelling force; at the same time, as the cross-linked network stretches, the conformational entropy of the polymer chain segments between the cross-linking points will decrease, causing the cross-linked network to produce elastic contraction force. The magnitude of this contraction force depends on the average molecular weight of the polymer chain segments between two adjacent cross-linking points in the cross-linked polymer. When the swelling force of the solvent and the contraction force of the chain segments between the cross-linking points are balanced, the cross-linking system reaches a swelling equilibrium state. The volume swelling degree of the cross-linked polymer = $V_S/V_0$ can be obtained according to the ratio of the volume $V_S$ at swelling equilibrium to the volume $V_0$ before measurement. The weight swelling rate of the cross-linked polymer = $W_S/W_d$ can be obtained according to the ratio of the weight $W_S$ at swelling equilibrium to the dry weight $W_d$ of the test sample. The average molecular weight of the polymer chain segments between the cross-linking points of the polymer can also be calculated according to conventional methods.

The lower the cross-linking degree of the polymer, the longer the molecular chain segments between the cross-linking points, and the higher the swelling degree; conversely, the higher the cross-linking degree, the shorter the molecular chain segments between the cross-linking points, and the lower the swelling degree.

In the present application, unless otherwise specified, the following method can be used to obtain a test sample

for testing the cross-linking degree and related parameters of the "gel part of the gel electrolyte": obtain a gel electrolyte sample from a specified position of a secondary battery (the gel electrolyte battery provided in the present application), freeze-dry it, wash it, perform solid-liquid separation to remove the electrolyte salt, solvent and other optional components and liquid electrolyte in the gel electrolyte, and collect the remaining gel skeleton to obtain a gel sample of the "gel part of the gel electrolyte".

Unless otherwise specified, the cross-linking degree test method of GB/T 18474-2001 can be referred to, and the test parameters can be appropriately adjusted according to the characteristics of the sample of the present application. The cross-linking degree of the "gel part of the gel electrolyte" can be tested by the following method: first weigh the initial weight W1 of a mesh bag, add the sample into the mesh bag and seal it to make a sample bag, and weigh the total weight W2; then add a solvent that can dissolve the monomer but cannot dissolve the cross-linked polymer into a flask (without limitation, the solvent can be xylene, but is not limited thereto), immerse the sample bag in the solvent, heat and extract it, so that the solvent evaporates with the uncross-linked monomer, leaving the cross-linked residual polymer sample, and weigh the total weight W3 of the cross-linked polymer sample and the mesh bag after oven drying. Among others, cross-linking degree = (W3-W1)/(W2-W1)×100%; where W1 is the initial mesh bag weight, W2 is the total weight of the sample and mesh bag before extraction, and W3 is the total weight of the sample and mesh bag after extraction and drying.

Unless otherwise specified, the weight swelling rate of the "gel part of the gel electrolyte" can be tested by the following method: weigh the dried gel sample (to obtain the sample dry weight $W_d$), then immerse the sample in the electrolyte solution at room temperature until swelling equilibrium (such as for at least 24 h), and take samples at different time points according to multiple parallel samples; take the test sample from the electrolyte solution until the weight basically does not change after swelling, remove the electrolyte solution on the surface with filter paper, and then weigh the sample to obtain the weight $W_S$ of the sample after swelling equilibrium. The swelling rate of the test sample is calculated by the following formula: swelling rate (by the gravimetric method) = $W_S/W_d$, where $W_S$ is the weight of the sample after swelling equilibrium, and $W_d$ is the dry weight of the sample.

Unless otherwise specified, the volume swelling degree of the "gel part of the gel electrolyte" can be tested by the following method: measure the volume $V_d$ of the dried gel sample, then immerse the sample in the electrolyte solution at room temperature until swelling equilibrium (such as for at least 24 h), and take samples at different time points according to multiple parallel samples; take the test sample from the electrolyte solution until the volume basically does not change after swelling, remove the electrolyte solution on the surface with filter paper, and then measure the volume to obtain the volume $V_S$ of the sample after swelling equilibrium. The volume swelling degree of the test sample is calculated by the following formula: volume swelling degree = $V_S/V_d$, wherein $V_S$ is the volume of the sample after swelling equilibrium, and $V_d$ is the volume of the sample in a dry state.

It can be understood that when comparing the swelling degrees of different gel samples, the samples are immersed in electrolyte solutions with the same composition. For the electrolyte solution, it may refer to the composition of other components of the gel electrolyte except the gel skeleton. The electrolyte solution may be mainly composed of a solvent and an electrolyte salt, and may or may not comprise an additive component.

In the present application, unless otherwise specified, "glass transition temperature (Tg)" has a well-known meaning in the field of polymer technology, and refers to the temperature corresponding to the transition from a glassy state to a highly elastic state. For a cross-linked polymer (such as the gel skeleton of the gel electrolyte in the present application or a corresponding gel sample), the lower the cross-linking degree, the lower the Tg temperature, and the higher the cross-linking degree, the higher the Tg temperature. The glass transition temperature of a sample can be measured by differential scanning calorimetry (DSC) or static thermomechanical analysis (TMA). The glass transition temperature of a material measured by DSC is obtained by measuring the change in the specific heat capacity of the material with temperature. The specific heat capacity will change significantly before and after Tg, and the value of the glass transition temperature can be determined based on the curve. The TMA method is based on the fact that polymers exhibit different deformations at different temperatures under the action of certain external forces. On the temperature-deformation curve, there will be an obvious turning point at the glass transition temperature, thereby determining the value of the glass transition temperature.

In the present application, unless otherwise specified, "thermal decomposition temperature (Td)" has a well-known meaning in the field of polymer technology, and refers to the temperature at which polymer molecules begin to crack, at which temperature the material will fail. For a cross-linked polymer (such as the gel skeleton of the gel electrolyte in the present application or a corresponding gel sample), the lower the cross-linking degree, the worse the stability of the material, and the lower the Td temperature; the higher the cross-linking degree, the better the stability of the material, and the higher the Td temperature. Thermogravimetry-mass spectrometry (TG-MS) can be used to simultaneously detect the weight change of the sample and the molecular weight change of the components to analyze and obtain the thermal decomposition temperature Td of the sample. At Td, the polymer weight loss has an obvious turning point, and the molecular weight decreases significantly due to molecular fragmentation.

In the present application, unless otherwise specified, samples for DSC, DMA or TG-MS testing can be obtained in the following manner: the gel sample of the "gel part of the gel electrolyte" prepared by the aforementioned method can

be directly used for testing.

In the context of the present application, parameters such as weight, volume, element distribution, etc. in the gel electrolytes at different positions can be tested and analyzed based on focused electron beam (FIB) technology, scanning electron microscope (SEM) technology, and elemental analysis technology. For example, it can be analyzed using focused electron beam (FIB) continuous sectioning, cross-sectional SEM morphology observation, energy dispersive spectroscopy (EDS) combined with elemental energy spectrum combination, and three-dimensional reconstruction analysis software. For example, the sample is finely sliced by using a cryo-focused ion beam (FIB) (the smallest scale can be nanoscale slices), and separated to obtain the first gel electrolyte sample and the second gel electrolyte sample. The morphology, structure and element distribution of each cross section can also be analyzed under FIB continuous slicing using a scanning electron microscope (SEM). Combined with three-dimensional structure reconstruction software, the three-dimensional structure of the sample can be reconstructed to estimate the mass and/or volume of the test sample. By disassembling the battery, samples from different positions such as the active material layer sample of the electrode sheet, the gel electrolyte sample on the surface of the electrode sheet, and the gel electrolyte sample in the opposite space between two oppositely arranged electrode sheets can be obtained, and then the above-mentioned method can be used to test parameters such as weight, volume, and element distribution.

In some embodiments, the mass ratio $m_{1/2}$ of the gel part of the first gel electrolyte to the gel part of the second gel electrolyte can be denoted by the following numerical ratio s1:1, $m_{1/2}$ can be (0.2-3):1, optionally (0.5-1):1, further optionally (0.79-1):1, and still further optionally 1:1. $m_{1/2}$ can also be any of the following proportions or ratios, and can also be selected from intervals consisting of any two of the following proportions or ratios: 0.2:1, 0.25:1, 0.3:1, 1:3, 0.35:1, 0.4:1, 0.5:1, .6:1, 0.75:1, 0.79:1, 0.8:1, 0.9:1, 1:1, 1.25:1, 1.5:1, 2:1, 2.5:1, 3:1, etc., that is, the value s1 can be any of the following values, and can also be selected from intervals consisting of any two of the following values: 0.2, 0.25, 0.3, 1:3, 0.35, 0.4, 0.5, 0.6, 0.75, 0.79, 0.8, 0.9, 1, 1.25, 1.5, 2, 2.5, 3, etc.

In some embodiments, the volume ratio $v_{1/2}$ of the gel part of the first gel electrolyte to the gel part of the second gel electrolyte can be denoted by the following numerical ratio s2:1, $v_{1/2}$ can be (0.2-3):1, optionally (0.5-1):1, further optionally (0.79-1):1, and still further optionally 1:1. $v_{1/2}$ can also be any of the following proportions or ratios, and can also be selected from intervals consisting of any two of the following proportions or ratios: 0.2:1, 0.25:1, 0.3:1, 1:3, 0.35:1, 0.4:1, 0.5:1, .6:1, 0.75:1, 0.79:1, 0.8:1, 0.9:1, 1:1, 1.25:1, 1.5:1, 2:1, 2.5:1, 3:1, etc., that is, the value s2 can be any of the following values, and can also be selected from intervals consisting of any two of the following values: 0.2, 0.25, 0.3, 1:3, 0.35, 0.4, 0.5, 0.6, 0.75, 0.79, 0.8, 0.9, 1, 1.25, 1.5, 2, 2.5, 3, etc.

In some embodiments, the cross-linking degree ratio $CX_{1/2}$ of the gel part of the first gel electrolyte to the gel part of the second gel electrolyte can be denoted by the following numerical ratio 1:s3, and $CX_{1/2}$ can be 1:(1-5), optionally 1:(1.1-2.0), further optionally 1:(1.5-2.0), and still further optionally 1:(1.8-2.0). The value s3 can be any of the following values, and can also be selected from intervals consisting of any two of the following values: 1, 1.1, 1.2, 1.3, 1.4, 1.5, 1.6, 1.75, 1.8, 2.0, 2.4, 2.5, 2.75, 3, 3.5, 3.6, 4, 4.5, 5, etc., that is, $CX_{1/2}$ can also be any of the following proportions or ratios, and can also be selected from intervals consisting of any two of the following proportions or ratios: 1:1, 1:1.1, 1:1.2, 1:1.3, 1:1.4, 1:1.5, 1:1.6, 1:1.75, 1:1.8, 1:2.0, 1:2.4, 1:2.5, 1:2.75, 1:3, 1:3.5, 1:3.6, 1:4, 1:4.5, 1:5, etc.

In some embodiments, the swelling rate ratio $Q_{1/2}$ of the gel part of the first gel electrolyte to the gel part of the second gel electrolyte can be denoted by the following numerical ratio s4:1, and $Q_{1/2}$ can be (1-4):1, optionally (1.3-2.5):1, further optionally (1.65-2.0):1, and still further optionally (1.8-2.0):1. $Q_{1/2}$ can also be any of the following proportions or ratios, and can also be selected from intervals consisting of any two of the following proportions or ratios: 1:1, 1.1:1, 1.2:1, 1.3:1, 1.4:1, 1.5:1, 1.6:1, 1.65:1, 1.7:1, 1.75:1, 1.8:1, 2.0:1, 2.4:1, 2.5:1, 2.75:1, 3:1, 3.5:1, 3.6:1, 4:1, etc.

In some embodiments, the thermal decomposition temperature ratio $Td_{1/2}$ of the gel part of the first gel electrolyte to the gel part of the second gel electrolyte can be denoted by the following numerical ratio 1:s5, and $Td_{1/2}$ can be 1:(1-4), optionally 1:(1.1-2.0), further optionally 1:(1.45-2.0), and still further optionally 1:(1.6-1.8). $Td_{1/2}$ can also be any of the following proportions or ratios, and can also be selected from intervals consisting of any two of the following proportions or ratios: 1:1, 1:1.1, 1:1.2, 1:1.3, 1:1.4, 1:1.45, 1:1.5, 1:1.6, 1:1.65, 1:1.7, 1:1.75, 1:1.8, 1:2.0, 1:2.4, 1:2.5, 1:2.75, 1:3, 1:3.5, 1:3.6, 1:4, etc.

The lower $m_{1/2}$ and $v_{1/2}$ are, the higher the content proportion of the second gel electrolyte is, which is more beneficial to improving the rigidity of the battery. However, if one or both of $m_{1/2}$ and $v_{1/2}$ is on the low side, the content of the second gel electrolyte will be on the high side, which may affect the filling space of the active material inside the battery and may reduce the energy density, or may cause the filling degree of the battery cell to be on the high side and the internal stress to increase, possibly leading to performance deterioration. On the other hand, if the content proportion of the first gel electrolyte is on the low side, it may cause insufficient coverage of the first gel electrolyte with a low cross-linking degree on the electrode surface, which may lead to poor electrode sheet infiltration effect and deterioration of electrical properties such as capacity. The lower $CX_{1/2}$, the higher $Q_{1/2}$ or the lower $Td_{1/2}$, the denser the network structure of the second gel electrolyte is, which is more conducive to providing a higher modulus and thus more beneficial to improving the rigidity of the battery. However, it may affect the electrolyte solution retention between the electrode sheets, thereby causing the battery performance to deteriorate after long-term cycling. By adjusting one or more parameters among mass ratio $m_{1/2}$,

volume ratio $v_{1/2}$, cross-linking degree ratio $CX_{1/2}$, swelling rate ratio $Q_{1/2}$ and thermal decomposition temperature ratio $Td_{1/2}$, the proportions of the first gel electrolyte and the second gel electrolyte can be controlled within a more appropriate range, and the synergistic combination between low cross-linking on the surface of the electrode sheet and high cross-linking in the opposite space between the electrode sheets can be better coordinated, thereby better optimizing the comprehensive performance of the gel electrolyte battery in terms of capacity, battery rigidity and safety.

In some embodiments, both the first gel electrolyte and the second gel electrolyte contain electrolyte salts; the ratio $f_{1/2}$ of the mass proportion f1 of the electrolyte salt in the first gel electrolyte to the mass proportion f2 of the electrolyte salt in the second gel electrolyte is 1.5:1 to 1: 1.5, optionally 1:(0.7-1.5), further optionally 1:(0.8-1), and still further optionally 1:(0.8-0.95). The $f_{1/2}$ can also be any of the following proportions or ratios, and can also be selected from intervals consisting of any two of the following proportions or ratios: 1.5:1, 1:0.67, 1:0.7, 1:0.75, 1:0.8, 1:0.9, 1:0.95, 1:1, 1:1.1, 1:1.2, 1::1.25, 1:1.3, 1:1.4, 1:1.45, 1:1.5, etc.

The higher the ratio $f_{1/2}$ of the mass proportion f1 of the electrolyte salt in the first gel electrolyte to the mass proportion f2 of the electrolyte salt in the second gel electrolyte, the higher the electrolyte salt concentration on the surface of the electrode sheet is, which helps more solvent to participate in solvation coordination, improves solvent stability, reduces side reaction consumption, and improves cycling performance. However, the large concentration difference of electrolyte salt between the first gel electrolyte and the second gel electrolyte may cause a mismatch in ion diffusion rate between the first gel electrolyte and the second gel electrolyte, which may affect the capacity and rate performance.

In some embodiments, the gel electrolyte battery satisfies one or more of the following features:

the mass proportion f1 of the electrolyte salt in the first gel electrolyte is 0.7-1.2 mol/L, and optionally 0.8-1.2 mol/L; the mass proportion f2 of the electrolyte salt in the second gel electrolyte is 0.7-1.2 mol/L, and optionally 0.8-1.2 mol/L.

In some embodiments, the mass proportion f1 of the electrolyte salt in the first gel electrolyte can be 0.7-1.2 mol/L, and optionally 0.8-1.2 mol/L; Non-limiting examples include 0.7 mol/L, 0.8 mol/L, 0.9 mol/L, 1 mol/L, 1.1 mol/L, 1.2 mol/L, etc.

In some embodiments, the mass proportion f2 of the electrolyte salt in the second gel electrolyte can be 0.7-1.2 mol/L, and optionally 0.8-1.2 mol/L; Non-limiting examples include 0.7 mol/L, 0.8 mol/L, 0.9 mol/L, 1 mol/L, 1.1 mol/L, 1.2 mol/L, etc.

By controlling the concentration of the electrolyte salt in the first gel electrolyte and/or the second gel electrolyte within a certain range, the solvent stability and ion diffusion rate requirements can be better balanced, thereby improving the battery's comprehensive performance such as cycling performance, capacity, and rate performance.

In some embodiments, at least part of the first gel electrolyte is located between the second gel electrolyte and the positive electrode sheet, and at least part of the first gel electrolyte is also located between the second gel electrolyte and the negative electrode sheet. At this time, at least part of the first gel electrolyte and at least part of the second gel electrolyte are simultaneously comprised between at least one pair of oppositely arranged positive electrode sheet and negative electrode sheet. At this time, the first gel electrolyte is arranged on the two opposite surfaces of at least one pair of positive electrode sheet and negative electrode sheet and forms two opposite faces, and the second gel electrolyte is arranged between the two opposite faces formed by the first gel electrolyte.

The cross-linking degree distribution of "positive electrode sheet surface-low cross-linking-high cross-linking region-low cross-linking-high cross-linking-negative electrode sheet surface", in which there is an electrode sheet surface low cross-linking region between at least one pair of oppositely arranged positive electrode sheet and negative electrode sheet and a high cross-linking region is arranged between the two opposite surfaces of the low cross-linking region, can better optimize the comprehensive performance of the gel electrolyte battery in terms of capacity, battery rigidity and safety.

In an embodiment, the gel electrolyte battery has a distribution pattern of the gel electrolyte as shown in FIG. 3. The gel electrolyte battery comprises an electrode assembly comprising a positive electrode sheet 110, a negative electrode sheet 120 and a separator 200, the separator 200 is located between the positive electrode sheet 110 and the negative electrode sheet 120; the gel electrolyte battery also comprises a first gel electrolyte 410 located on the two opposite surfaces of the positive electrode sheet 110 and the negative electrode sheet 120, and a second gel electrolyte 420 located in at least part of the opposite space between the positive electrode sheet 110 and the negative electrode sheet 120, wherein the second gel electrolyte 420 is located outside the separator 200; in this embodiment, at least part of the first gel electrolyte 410 and at least part of the second gel electrolyte 420 are simultaneously comprised between the oppositely arranged positive electrode sheet 110 and the negative electrode sheet 120, at least part of the first gel electrolyte 410 is located between the second gel electrolyte 420 and the positive electrode sheet 110 and at least part of it is located between the second gel electrolyte 420 and the negative electrode sheet 120.

In some embodiments, the gel electrolyte further comprises a third gel electrolyte, and the third gel electrolyte is located in at least part of a third region and a fourth region; wherein the third region is a gap region between negative electrode active materials in the negative electrode sheet, and the fourth region is a gap region between positive electrode

active materials in the positive electrode sheet.

The gel electrolyte in the gel electrolyte battery can also be distributed in the gap region in the active material layer of the electrode sheet, which helps to promote the electrical contact and capacity of the active material particles.

In an embodiment, the gel electrolyte battery has a distribution pattern of the gel electrolyte as shown in FIG. 4. The gel electrolyte battery comprises an electrode sheet and a first gel electrolyte 410 located on both sides of the electrode sheet, and a second gel electrolyte 420 distributed on both sides of the electrode sheet and located on both sides of the first gel electrolyte 410 and distant from the electrode sheet; the electrode sheet comprises a current collector 101, an active material layer 103 located on both sides of the current collector 101, the active material layer 103 comprises a granular active material 1031, there is a gap region between the granular active materials 1031 of the active material layer 103, and there is a third gel electrolyte 430 in the gap region.

In some embodiments, the mass ratio of the gel part of the first gel electrolyte to the gel part of the third gel electrolyte can be denoted by $m_{1/3}$, and can be denoted by the following numerical ratio 1:s6. $m_{1/3}$ may be 1:(4-10), optionally 1:(4-8), and further optionally 1:(4-6). $m_{1/3}$ can be any of the following proportions or ratios, and can also be selected from intervals consisting of any two of the following proportions or ratios: 1:4, 1:4.5, 1:5, 1:5.5, 1:6, 1:6.5, 1:7, 1:7.5, 1:8, 1:8.5, 1:9, 1:9.5, 1:10, etc.

By adjusting the mass ratio of the gel part of the first gel electrolyte to the gel part of the third gel electrolyte, the distribution ratio of the gel electrolyte on the surface of the electrode sheet and inside the electrode sheet can be directly regulated, and the distribution ratio of the gel electrolyte outside the electrode sheet and inside the electrode sheet can be indirectly regulated, so that both the inside and the surface of the electrode sheet have an appropriate amount of gel electrolyte, and then a suitable infiltration buffer layer is provided between the active material layer of the electrode sheet and the high rigidity layer between the electrode sheets, which is conducive to achieving good capacity of the battery.

In some embodiments, at least part of the second gel electrolyte is in contact with the first gel electrolyte in at least part of the first region and the second region.

The gel electrolyte in the opposite space between the electrode sheets can be brought into direct contact with the gel electrolyte on the surface of the electrode sheet, which is conductive to maintaining better ion transport and lower solution impedance during the use of the battery, thereby achieving better battery performance.

In some embodiments, the electrode assembly further comprises a separator, the separator is arranged between the positive electrode sheet and the negative electrode sheet, and the second gel electrolyte is located outside the separator.

In some embodiments, the gel electrolyte further comprises a fourth gel electrolyte, and the fourth gel electrolyte is located in the inner pores of the separator.

In some embodiments, the mass ratio $m_{2/4}$ of the gel part of the second gel electrolyte to the gel part of the fourth gel electrolyte is (4-9):1, optionally (5-9):1, and further optionally (6-8):1. $m_{2/4}$ can also be any of the following proportions or ratios, and can also be selected from intervals consisting of any two of the following proportions or ratios: 4:1, 4.5:1, 5:1, 5.5:1, 6:1, 6.5:1, 7:1, 7.5:1, 8:1, 8.5:1, 9:1, etc.

The inner pores of the separator may contain the gel electrolyte, which, at this time, is more conducive to improving the strength of the separator, inhibiting the thermal shrinkage of the separator, maintaining ion conductivity while improving battery safety. By adjusting the ratio of the content of the gel electrolyte in the opposite space between the electrode sheets to the content inside the separator, the gel electrolyte content in the separator can be reasonably controlled to better optimize the above-mentioned effects.

In an embodiment, the gel electrolyte battery has a distribution pattern of the gel electrolyte as shown in FIG. 5. The gel electrolyte battery comprises a positive electrode sheet 110, a negative electrode sheet 120 and a separator 200 located between the positive electrode sheet 110 and the negative electrode sheet 120, wherein a first gel electrolyte 410 is present on the two opposite surfaces of the positive electrode sheet 110 and the negative electrode sheet 120, and a second gel electrolyte 420 is present in at least part of the opposite space between the positive electrode sheet 110 and the negative electrode sheet 120, the second gel electrolyte 420 is located in at least part of the opposite space between the two opposite surfaces of the first gel electrolyte 410 distant from the positive electrode sheet 110 and distant from the negative electrode sheet 120, and the second gel electrolyte 420 is located outside the separator 200; the separator 200 comprises separator particles 201 and a fourth gel electrolyte 440 distributed in at least part of the pores between the separator particles 201; in this embodiment, at least part of the first gel electrolyte 410 is located between the second gel electrolyte 420 and the positive electrode sheet 110, and at least part of the first gel electrolyte is also located between the second gel electrolyte 420 and the negative electrode sheet 120.

In an embodiment, the gel electrolyte battery has a distribution pattern of the gel electrolyte as shown in FIG. 5. The gel electrolyte battery comprises a positive electrode sheet 110, a negative electrode sheet 120 and a separator 200 located between the positive electrode sheet 110 and the negative electrode sheet 120. A first gel electrolyte 410 is present on the two opposite surfaces of the positive electrode sheet 110 and the negative electrode sheet 120 and forms two opposite faces. A second gel electrolyte 420 is provided on at least part of the region between the two opposite faces formed by the first gel electrolyte 410, and the second gel electrolyte 420 is located outside the separator 200. The

separator 200 comprises separator particles 201 and a fourth gel electrolyte 440 distributed in at least part of the pores between the separator particles 201.

In some embodiments, the gel electrolyte battery further comprises a case, and the electrode assembly and the electrolyte are both located inside the case;

the electrolyte further comprises or does not comprise a fifth gel electrolyte, and comprises or does not comprise a sixth gel electrolyte, wherein the fifth gel electrolyte is located on at least part of the outermost surface of the electrode assembly, the sixth gel electrolyte is located in at least part of the opposite space between the outermost surface of the electrode assembly and the inner wall of the case, and the cross-linking degree of the sixth gel electrolyte is higher than the cross-linking degree of the fifth gel electrolyte.

The gel electrolyte can be arranged between the electrode assembly and the battery case to provide rigid protection for the periphery of the electrode assembly and further improve the overall rigidity of the gel electrolyte battery. The design of combining the low cross-linking degree of the outermost surface of the electrode assembly with the high cross-linking degree between the electrode assembly and the case can be formed simultaneously with the formation of the first gel electrolyte and the second gel electrolyte.

In an embodiment, the gel electrolyte battery has a distribution pattern of the gel electrolyte as shown in FIG. 6. FIG. 6 is a longitudinal cross-sectional view (left) and a partial enlarged longitudinal cross-sectional view (right) of a gel electrolyte battery in the embodiment. In the longitudinal cross-sectional view at the left side, the four regions separated by vertical solid lines represent two bare battery cells assembled by a winding structure, and the two bare battery cells are connected in parallel to the top cover through an adapter plate on the top; the partial enlarged longitudinal cross-sectional view at the right side illustrates the stacking of the positive and negative electrode sheets and the separator in the bare battery cell, and shows in detail the distribution of the gel electrolyte in the case 51. The gel electrolyte battery 5 comprises a case 51 and an electrode assembly, and the electrode assembly comprises a plurality of positive electrode sheets 110, a plurality of negative electrode sheets 120, and a plurality of separators 200 arranged between any pairs of opposite positive electrode sheets 110 and negative electrode sheets 120. A first gel electrolyte 410 is present on the two opposite surfaces of at least one pair of opposite positive electrode sheet 110 and negative electrode sheet 120, and a second gel electrolyte 420 is present on at least part of the opposite space between the aforementioned pair of opposite positive electrode sheet 110 and negative electrode sheet 120. The second gel electrolyte 420 is located in at least part of the opposite space between the two opposite surfaces of the first gel electrolyte 410 distant from the positive electrode sheet 110 and distant from the negative electrode sheet 120, and the second gel electrolyte 420 is located outside the corresponding separator 200 and between the two opposite surfaces of the first gel electrolyte 410. A fifth gel electrolyte 450 is present on the outermost surface of the electrode assembly, and a sixth gel electrolyte 460 is present in the region between the electrode assembly and the case 51; the sixth gel electrolyte is located in the region of the fifth gel electrolyte 450 distant from the electrode assembly.

In some embodiments, the ratio of the sum of the gel part mass m5 of the fifth gel electrolyte and the gel part mass m6 of the sixth gel electrolyte to the sum of the gel part mass m1 of the first gel electrolyte and the gel part mass m2 of the second gel electrolyte satisfies $0 \le (m5+m6)/(m1+m2) \le 12.5\%$, optionally satisfies $0 \le (m5+m6)/(m1+m2) \le 10\%$, further optionally satisfies $4\% \le (m5+m6)/(m1+m2) \le 12.5\%$, still further optionally satisfies $5\% \le (m5+m6)/(m1+m2) \le 12.5\%$, and still further optionally satisfies $5\% \le (m5+m6)/(m1+m2) \le 10\%$. (m5+m6)/(m1+m2) can also be any of the following percentages, or be selected from intervals consisting of any two of the following percentages: 0, 0.1%, 0.2%, 0.25%, 0.3%, 0.4%, .5%, 0.6%, 0.7%, 0.75%, 0.8%, 0.9%, 1%, 1.2%, 1.25%, 1.3%, 1.4%, 1.5%, 1.6%, 1.8%, 2%, 2.5%, 3%, 3.5%, 4%, 4.5%, 5%, 5.5%, 6%, 6.5%, 7%, 7.5%, 8%, 9%, 10%, 11%, 12%, 12.5%, etc.

By controlling the ratio of the gel electrolyte outside the electrode assembly (comprising the fifth gel electrolyte on the outermost surface of the electrode assembly and the sixth gel electrolyte between the electrode assembly and the case, corresponding to m5+m6) to the gel electrolyte outside the electrode sheet in the electrode assembly region (comprising the first gel electrolyte on the surface of the electrode sheet and the second gel electrolyte in at least part of the opposite space between the electrode sheets, corresponding to m1+m2), the gel electrolyte outside the electrode assembly can be controlled within a certain range, which can not only provide certain rigid protection for the periphery of the electrode assembly, but also provide sufficient gel electrolyte in the region where the electrode assembly is located. This maintains good battery capacity performance while providing higher battery rigidity, and can also play a role in effectively transporting active ions in the charge and discharge cycle of the battery.

In some embodiments, the electrolyte further comprises or does not comprise a liquid electrolyte;

optionally, the mass ratio of the gel part of the gel electrolyte to the liquid electrolyte is 1:(0-0.05), further optionally 1:(0.01-0.05), and further optionally 1:(0.02-0.04). Non-limiting examples of the mass ratio of the gel part of the gel electrolyte to the liquid electrolyte include 1:0.02, 1:0.03, 1:0.04, 1:0.05, and the like.

While introducing a gel electrolyte into gel electrolyte batteries, the traditional liquid electrolyte can be retained, and the overall rigidity of the battery can be significantly improved. At this time, the interface infiltration contact between the active material and the gel electrolyte can be improved, and the electrolyte solution consumption during the cycle can be replenished, thereby improving the long-term cycling performance of the battery.

In some embodiments, the positive electrode sheet comprises a positive electrode active material layer, the positive electrode active material layer comprises a positive electrode active material, and the positive electrode active material comprises a lithium ion material. When the active ions in the gel electrolyte battery comprise lithium ions, the electrolyte salts in the electrolyte may comprise lithium salts that are more compatible with the active ions, which helps to better play the role of transporting active lithium ions.

In some embodiments, the electrolyte salt in the electrolyte comprises a lithium salt. At this time, the ions that can be ionized from the electrolyte salt comprise lithium ions, which is more conducive to conducting active lithium ions.

In some embodiments, the electrolyte salt in the gel electrolyte comprises a lithium salt. In some embodiments, the electrolyte salts in the first gel electrolyte and the second gel electrolyte each independently comprise a lithium salt.

In some embodiments, the electrolyte salt in the gel electrolyte is a lithium salt. In some embodiments, the electrolyte salts in the first gel electrolyte and the second gel electrolyte are each independently lithium salts.

In some embodiments, the electrolyte salt in the liquid electrolyte comprises a lithium salt. In some of the embodiments, the electrolyte salt in the liquid electrolyte is a lithium salt.

In some embodiments, the electrolyte salts in the first gel electrolyte and the second gel electrolyte each independently comprise a lithium salts. In some of the embodiments, the electrolyte salts in the first gel electrolyte and the second gel electrolyte are each independently lithium salts.

The lithium salt in the electrolyte salt may be distributed in at least one of the gel electrolyte and the liquid electrolyte, and may be at least distributed in the gel electrolyte or at least distributed in the liquid electrolyte. Without limitation, the lithium salt in the electrolyte salt may be distributed in both the gel electrolyte and the liquid electrolyte.

In some embodiments, the electrolyte salt in the liquid electrolyte is a lithium salt.

In some embodiments, the electrolyte salts in both the gel electrolyte and the liquid electrolyte are lithium salts.

In some embodiments, the gel electrolyte battery is a lithium ion secondary battery. Furthermore, the electrolyte salt may comprise a lithium salt. In some preferred embodiments, the electrolyte salt is a lithium salt.

When the active ions in the gel electrolyte battery comprise lithium ions, the electrolyte salts in the gel electrolyte and the liquid electrolyte may each independently comprise lithium salts, so as to better play the role of transporting active ions. Furthermore, the electrolyte salts in the first gel electrolyte and the second gel electrolyte may each independently comprise lithium salts, which helps to better play the role of transporting active ions.

In an embodiment of the present application, the gel electrolyte battery comprises a positive electrode sheet, a negative electrode sheet and an electrolyte. During charging and discharging of the battery, active ions are intercalated and deintercalated back and forth between the positive electrode sheet and the negative electrode sheet. The electrolyte serves to conduct active ions between the positive electrode sheet and the negative electrode sheet.

In an embodiment of the present application, the gel electrolyte battery comprises a positive electrode sheet, a negative electrode sheet, an electrolyte and a separator. During charging and discharging of the battery, active ions are intercalated and deintercalated back and forth between the positive electrode sheet and the negative electrode sheet. The electrolyte serves to conduct active ions between the positive electrode sheet and the negative electrode sheet. The separator is arranged between the positive electrode sheet and the negative electrode sheet, and mainly functions to prevent a short circuit between the positive electrode and the negative electrode while allowing active ions to pass through.

The types of active ions can be as described above.

## Electrolyte

The electrolyte serves to conduct ions between the positive electrode sheet and the negative electrode sheet.

The electrolyte in the gel electrolyte battery provided in the present application comprises at least the aforementioned gel electrolyte, and may also comprise the aforementioned liquid electrolyte. In terms of physical form, the electrolyte comprises at least gel state, and may also comprise liquid state. In the present application, the electrolyte of gel state is referred to as a gel electrolyte, and the electrolyte of liquid state is referred to as a liquid electrolyte or an electrolyte solution.

In the present application, unless otherwise specified, at least part of the gel electrolyte is distributed on at least part of at least one side surface of at least one electrode sheet (corresponding to the first gel electrolyte), and at least part of the gel electrolyte is distributed in at least part of the opposite space of at least one pair of oppositely arranged positive electrode sheet and negative electrode sheet (corresponding to the second gel electrolyte), and the cross-linking degree of the gel part of the second gel electrolyte is higher than the cross-linking degree of the gel part of the first gel electrolyte.

The definitions of electrolyte, gel electrolyte and liquid electrolyte may also refer to other descriptions in the context.

The gel skeleton in the gel electrolyte can be formed by the polymerization reaction of cross-linkable monomers. During the polymerization reaction, a corresponding initiator and/or a cross-linking agent may be added.

The reaction in which the cross-linkable monomer is used to form the gel skeleton is generally a polymerization reaction, and the cross-linkable monomer here is a polymerizable monomer. The monomers that participate in forming the

gel skeleton through polymerization reaction can be collectively referred to as polymerizable monomers. The polymerizable monomers at least include cross-linkable monomers, but are not limited thereto. For example, the polymerizable monomers may also include chain-extending monomers. Chain-extending monomers can provide linear segments between cross-linking points in the gel skeleton.

In the present application, the cross-linkable monomer comprises a functional group pair that can undergo cross-linking reaction. Non-limiting examples of functional group pairs that can undergo cross-linking reaction include multiple carbon-carbon double bonds, and furthermore, for example, monomers containing at least 2 carbon-carbon double bonds; cross-linkable monomer combinations, for example, a cross-linkable monomer combination comprising two monomers, wherein one monomer comprises at least 2 reactive groups F1, and the other monomer comprises at least 3 reactive groups F2, and F1 and F2 can be coupled to form a covalent bond. Non-limiting examples of carbon-carbon double bonds include $CH_2=CH-CH_2-$, $CH_2=C(CH_3)-CH_2-$, etc. The hydrogen atoms on the carbon-carbon double bonds may be substituted with suitable substituents as long as the cross-linking polymerization reaction is not affected. Non-limiting examples of cross-linkable monomer combinations include a combination of polyol or polyamine with polyisocyanate, which can undergo coupling reaction between -OH or amino (such as $-NH_2$ or >NH) and -NCO to form polyurethane or polyurea; and a combination of polyacid and polyamine, which can undergo coupling reaction between -COOH and $-NH_2$ or >NH to form a polymer containing an amide bond (-CO-NH- or -CO-N<), etc.

The types of polymerizable monomers may include, but are not limited to, one or more of carbonate monomers, sulfone monomers, isocyanate monomers, amide monomers, nitrile monomers, fluorinated monomers, ether compound monomers, ether segment-containing oligomers, and siloxanes.

When the cross-linking reaction of the cross-linkable monomer is carried out, the system may or may not contain an initiator according to the requirements of the cross-linking reaction. When an initiator is added, the initiator may include, but is not limited to, one or more of an azo initiator (such as azobisisobutyronitrile (AIBN)), a peroxide initiator, an anionic or cationic initiator, an organic metal compound initiator, an amine catalyst initiator, and an organic phosphorus initiator. The type and amount of the initiator can be appropriately selected and controlled according to the type and amount of the polymerizable monomers (comprising at least the cross-linkable monomer). For example, the mass ratio of the initiator to the cross-linkable monomer may be 1% to 5%, but is not limited thereto.

In some embodiments, the electrolyte in the gel electrolyte battery is a non-aqueous electrolyte. The non-aqueous electrolyte comprises an electrolyte salt and a solvent. In the present application, the gel electrolytes at different positions (such as at least two of the first gel electrolyte, the second gel electrolyte, the third gel electrolyte, the fourth gel electrolyte, the fifth gel electrolyte, and the sixth gel electrolyte) may be the same or different in terms of composition. The electrolyte salts in the gel electrolytes at different positions may be the same or different. The electrolyte salts in the first gel electrolyte, the second gel electrolyte, the third gel electrolyte, the fourth gel electrolyte, the fifth gel electrolyte, and the sixth gel electrolyte may be independent of each other, and any two of them may be the same or different. The solvents in the gel electrolytes at different positions may be the same or different. The solvents in the first gel electrolyte, the second gel electrolyte, the third gel electrolyte, the fourth gel electrolyte, the fifth gel electrolyte, and the sixth gel electrolyte may be independent of each other, and any two of them may be the same or different.

In some embodiments, the gel electrolyte battery is a lithium ion secondary battery, and the electrolyte salt may include an electrolyte lithium salt. In some embodiments, the electrolyte salt contained in one or more of the first gel electrolyte, the second gel electrolyte, the third gel electrolyte, the fourth gel electrolyte, the fifth gel electrolyte, and the sixth gel electrolyte comprises a lithium salt.

In some embodiments, the electrolyte lithium salt may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluoro bis(oxalato)phosphate (LiDFOP), and lithium tetrafluoro(oxalato)phosphate (LiTFOP).

In some embodiments, the solvent in the electrolyte is a non-aqueous solvent, may further be an organic solvent, and may further include but is not limited to one or more of a carboxylate solvent, a carbonate solvent, and a sulfone solvent. The carboxylate solvent may be a carboxylate or a halogenated carboxylate, and may further be a $C_{1-3}$ alkyl ester of a $C_{2-4}$ alkyl carboxylic acid or a halide thereof. The halide of carboxylate is also called halogenated carboxylate. Examples of the $C_{1-4}$ alkyl carboxylic acid are acetic acid, propionic acid and butyric acid. Examples of $C_{1-3}$ alkyl esters of carboxylic acids include methyl ester, ethyl ester and propyl ester. The carbonate solvent may be a carbonate or a halide thereof. The halide of carbonate is also called halogenated carbonate. The halogen substituent in the halogenated carboxylate and the halogenated carbonate may be fluorine, and the number of the halogen substituents may range from 1 to being perfluorinated. Taking fluorination as an example, the number of fluorine atoms in fluorinated carboxylates and fluorinated carbonates can range from 1 to being perfluorinated.

Without limitation, the solvent in the electrolyte may include but is not limited to fluoroethylene carbonate, ethylene carbonate (or EC,

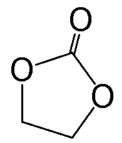

), propylene carbonate (or PC,

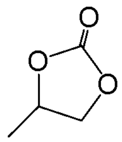

), methyl ethyl carbonate, diethyl carbonate, dimethyl carbonate, dipropyl carbonate, methyl propyl carbonate, ethyl propyl carbonate, butylene carbonate, methyl formate, methyl acetate, ethyl acetate, propyl acetate, methyl propionate, ethyl propionate, methyl butyrate, ethyl butyrate, 1,4-butyrolactone, sulfolane, dimethyl sulfone, methyl ethyl sulfone, and diethyl sulfone. In some embodiments, the solvent in the electrolyte in the gel electrolyte battery comprises fluoroethylene carbonate. In some embodiments, the solvent in the electrolyte in the gel electrolyte battery is fluoroethylene carbonate.

In some embodiments, the solvent in the electrolyte may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS), and ethylsulfonylethane (ESE).

In some embodiments, the electrolyte optionally further comprises an additive. For example, the additive may include a negative electrode film-forming additive and a positive electrode film-forming additive, and may further include an additive that can improve certain performances of the battery, such as an additive that improves the overcharge performance of the battery, or an additive that improves the high-temperature or low-temperature performance of the battery.

The first gel electrolyte, the second gel electrolyte, the third gel electrolyte, the fourth gel electrolyte, the fifth gel electrolyte, and the sixth gel electrolyte each independently comprise or do not comprise additives. When at least two of them comprise additives, the types of additives in any two of them may be the same or different.

In some embodiments, the additive in the electrolyte may include, but is not limited to, one or more of vinylene carbonate (VC,

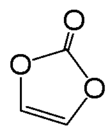

), vinyl ethylene carbonate (VEC,

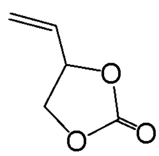

), fluoroethylene carbonate (FEC), difluoroethylene carbonate (DFEC), trifluoromethylethylene carbonate (TFPC), methylene methanedisulfonate (MMDS), 1-propylene-1,3-sultone (PST), ethylene sulfite (ES), propylene sulfite (PS), ethylene sulfate (DTD), succinonitrile (SN), adiponitrile (AND), cyclic quaternary ammonium sulfonate, tris(trimethylsilyl) phosphate (TMSP), tris(trimethylsilyl) borate (TMSB) and anisole.

## Negative electrode sheet

The negative electrode sheet in the gel electrolyte battery provided in the present application comprises a negative electrode active material layer, and the negative electrode active material layer comprises a negative electrode active material.

The negative electrode active material may include a negative electrode active material for a battery known in the art. As a non-limiting example, other negative electrode active materials may include one or more of the following materials: artificial graphite, natural graphite, soft carbon, hard carbon, silicon-based materials, tin-based materials, lithium titanate, and the like. The silicon-based material can include one or more of monatomic silicon, a silicon-oxygen compound, a silicon-carbon compound, a silicon-nitrogen compound and a silicon alloy. The tin-based material can include one or more of monatomic tin, a tin-oxygen compound and a tin alloy. However, the present application is not limited to these materials, and other traditional materials that may be used for the negative electrode active materials of batteries may also be used. One of these negative electrode active materials may be used alone, or two or more of these negative electrode active materials may be used in combination.

In some embodiments, the negative electrode sheet comprises a negative electrode current collector and a negative electrode film layer disposed on at least one surface of the negative electrode current collector, the negative electrode film layer comprises a negative electrode active material layer, and the negative electrode active material layer comprises a negative electrode active material. The negative electrode active material may be as defined above.

As a non-limiting example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil can be used as the metal foil. The composite current collector may comprise a high molecular material substrate layer and a metal layer formed on at least one surface of the high molecular material substrate. The composite current collector can be obtained by forming a metal material on the high molecular material substrate. Non-limiting examples of the metal material in the negative electrode current collector may include one or more of copper, copper alloy, nickel, nickel alloy, titanium, titanium alloy, silver and silver alloy. Non-limiting examples of the high molecular material substrate in the negative electrode current collector may include one or more of polypropylene (PP), polyethylene terephthalate (PET), polybutylene terephthalate (PBT), polystyrene (PS), polyethylene (PE) and other substrates.

In some embodiments, the negative electrode active material layer may further optionally comprise a binder. The binder can include one or more of styrene butadiene rubber (SBR), polyacrylic acid (PAA), sodium polyacrylate (PAAS), polyacrylamide (PAM), polyvinyl alcohol (PVA), sodium alginate (SA), polymethylacrylic acid (PMAA) and carboxymethyl chitosan (CMCS). An example of the PAA-based binder is polyacrylic acid (PAA).

In some embodiments, the binder in the negative electrode film layer or the negative electrode active material layer comprises one or more of PAA and SBR.

In some embodiments, the negative electrode film layer further optionally comprises a conductive agent. The conductive agent can include one or more of superconducting carbon, acetylene black, carbon black, Ketjen black, carbon dots, carbon nanotubes, graphene and carbon fibers.

In some embodiments, the negative electrode active material layer may further optionally comprise other additives, such as thickeners. Non-limiting examples of the thickener may include sodium carboxymethylcellulose (CMC-Na) and the like.

In some embodiments, the negative electrode sheet can be prepared as follows: dispersing the aforementioned components for preparing the negative electrode sheet, e.g., the negative electrode active material, the conductive agent, the binder and any other components in a solvent (e.g. deionized water as a non-limiting example of the solvent) to form a negative electrode slurry; and coating the negative electrode slurry on at least one side surface of a negative electrode current collector, followed by oven drying, pressing (such as cold pressing) and other procedures, to obtain the negative electrode sheet. The surface of the negative electrode current collector coated with the negative electrode slurry may be a single surface of the negative electrode current collector or both surfaces of the negative electrode current collector. The solid content of the negative electrode slurry can be 30wt% to 70wt%. The viscosity of the negative electrode slurry at room temperature can be 2000 mPa·s to 10000 mPa·s. When the negative electrode slurry is applied, the unit areal density of the coating may be 35 g/m$^2$ to 150 g/m$^2$ based on dry weight. The compacted density of the negative electrode sheet can be 1.0 g/cm$^3$ to 1.8 g/cm$^3$.

## Positive electrode sheet

In the present application, the positive electrode sheet comprises a positive electrode current collector and a positive electrode film layer disposed on at least one surface of the positive electrode current collector, the positive electrode film layer comprises a positive electrode active material layer, and furthermore, the positive electrode active material layer comprises a positive electrode active material.

As a non-limiting example, the positive electrode current collector has two surfaces opposite in its own thickness direction, and the positive electrode film layer is arranged on either one or both of the two opposite surfaces of the positive electrode current collector.

In some embodiments, the positive electrode current collector can be a metal foil or a composite current collector. For example, an aluminum foil can be used as the metal foil. The composite current collector may comprise a high molecular material substrate layer and a metal layer formed on at least one surface of the high molecular material substrate layer. The composite current collector can be formed by forming a metal material on a high molecular material substrate; the metal material may include one or more of aluminium, aluminium alloy, nickel, nickel alloy, titanium, titanium alloy, silver and silver alloy; non-limiting examples of the high molecular material substrate include polypropylene (PP), polyethylene terephthalate (PET), polybutylene terephthalate (PBT), polystyrene (PS), polyethylene (PE) and other substrates.

In some embodiments of the present application, the positive electrode active material comprises a lithium ion material; further, the gel electrolyte battery is a lithium ion secondary battery.

In some embodiments of the present application, the gel electrolyte battery is a lithium ion secondary battery. Lithium ion secondary batteries utilize the intercalation and deintercalation of lithium ions in electrodes and their transport in electrolytes to achieve the charging and discharging process. Generally speaking, active ions in lithium ion secondary batteries are lithium ions, but are not limited thereto.

A positive electrode active material for a battery well-known in the art may be used as the positive electrode active material. As a non-limiting example, the positive electrode active material or lithium ion material may include one or more of the following materials or substances: a lithium-containing phosphate of olivine structure, a lithium transition metal oxide, and their respective modified compounds. However, the present application is not limited to these materials or substances, and other conventional materials or substances that may be used for the positive electrode active materials of batteries may also be used. One of these positive electrode active materials may be used alone, or two or more of these positive electrode active materials may be used in combination. Non-limiting examples of the lithium transition metal oxide may include, but are not limited to, one or more of lithium cobalt oxides, lithium nickel oxides, lithium manganese oxides, lithium nickel cobalt oxides, lithium manganese cobalt oxides, lithium nickel manganese oxides, lithium nickel cobalt manganese oxides, lithium nickel cobalt aluminum oxides, and modified compounds thereof. Non-limiting examples of lithium cobalt oxides include $LiCoO_2$; non-limiting examples of lithium nickel oxides include $LiNiO_2$; non-limiting examples of lithium manganese oxides include $LiMnO_2$, $LiMn_2O_4$, etc.; non-limiting examples of lithium nickel cobalt manganese oxides include $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$), etc. Non-limiting examples of lithium nickel cobalt aluminum oxides include $LiNi_{0.85}Co_{0.15}Al_{0.05}O_2$. Non-limiting examples of the lithium-containing phosphate of olivine structure may include, but are not limited to, one or more of lithium iron phosphate, composites of lithium iron phosphate and carbon, lithium manganese phosphate, composites of lithium manganese phosphate and carbon, lithium iron manganese phosphate, composites of lithium iron manganese phosphate and carbon. Non-limiting examples of lithium iron phosphate include $LiFePO_4$ (also abbreviated as LFP); non-limiting examples of lithium manganese phosphate include $LiMnPO_4$.

In some embodiments, the positive electrode active material layer may further optionally comprise a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode active material layer may further optionally comprise a conductive agent. As a non-limiting example, the conductive agent may include one or more of superconducting carbon, acetylene black, carbon black, Ketjen black, carbon dot, carbon nanotubes, graphene, and carbon nanofibers.

In some embodiments, the positive electrode sheet can be prepared as follows: dispersing the aforementioned components for preparing the positive electrode sheet, e.g., the positive electrode active material, the conductive agent, the binder and any other components in a solvent to form a positive electrode slurry; and coating the positive electrode slurry on at least one side surface of a positive electrode current collector, followed by oven drying, pressing (such as cold pressing) and other procedures, to obtain the positive electrode sheet. The type of solvent may be selected from but not limited to any one in the aforementioned embodiments, such as N-methylpyrrolidone (NMP). The surface of the positive electrode current collector coated with the positive electrode slurry may be a single surface of the positive electrode current collector or both surfaces of the positive electrode current collector. The solid content of the positive electrode slurry can be 40wt% to 80wt%. The viscosity of the positive electrode slurry at room temperature can be 5000 mPa·s to 25000 mPa·s. When the positive electrode slurry is applied, the unit areal density of the coating may be 130 $g/m^2$ to 400 $g/m^2$ based on dry weight. The compacted density of the positive electrode sheet may be 3.0-3.6 $g/cm^3$, and optionally 3.3-3.5 $g/cm^3$.

## Separator

In some embodiments, the gel electrolyte battery further comprises a separator. The type of the separator is not particularly limited in the present application, and any well-known separator having good chemical stability, mechanical stability, and a porous structure may be selected.

In some embodiments, the material of the separator may include one or more of glass fiber, non-woven fabric,

polyethylene, polypropylene, and polyvinylidene fluoride. The separator may be a single-layer film, or may be a multi-layer composite film, which is not particularly limited. When the separator film is a multi-layer composite film, the material in various layers may be the same or different, which is not particularly limited.

## Electrode assembly, electrochemical energy storage apparatus, gel electrolyte battery (a secondary battery)

In some embodiments, the positive electrode sheet, the negative electrode sheet, and the separator may be made into an electrode assembly by a winding process or a stacking process.

In some embodiments, the electrochemical energy storage apparatus may comprise an outer package. The outer package can be used to encapsulate the above electrode assembly and the above electrolyte.

In some embodiments, the gel electrolyte battery may comprise an outer package. The outer package can be used to encapsulate the above electrode assembly and the above electrolyte.

In some embodiments, the outer package of the gel electrolyte battery can be a hard shell, such as a hard plastic shell, an aluminum shell, and a steel shell. The outer package of the gel electrolyte battery may also be a soft pack, such as a pouch-type soft pack. The material of the soft pack can be plastic, and furthermore, non-limiting examples of plastic may include one or more of polypropylene, polybutylene terephthalate, and polybutylene succinate, etc.

The shape of the gel electrolyte battery is not particularly limited in the present application, and the secondary battery may be a cylinder, a square, or any other shape. For example, FIG. 7 is a gel electrolyte battery 5 of a square structure as an example.

The gel electrolyte battery provided in the present application can enhance the rigidity of the bare battery cell itself, improve the ability of the battery cell to resist deformation and the safety, and is particularly effective in soft-pack battery cells.

In some embodiments, referring to FIG. 8, the outer package may comprise a case 51 and a cover plate 53. Here, the case 51 can comprise a bottom plate and a side plate connected to the bottom plate, with the bottom plate and the side plate enclosing to form an accommodating cavity. The case 51 has an opening that communicates with the accommodating cavity, and the cover plate 53 may cover the opening to close the accommodating cavity. The positive electrode sheet, the negative electrode sheet, and the separator may be formed into an electrode assembly 52 by a winding process or a stacking process. The electrode assembly 52 is encapsulated within the accommodating cavity. The distribution of the electrolyte relative to the electrode assembly or a portion thereof is as previously described. The number of electrode assemblies 52 contained in the gel electrolyte battery 5 may be one or more, and may be selected by those skilled in the art according to actual needs.

In a second aspect, the present application provides a preparation method for a gel electrolyte battery, which comprises the following steps:

mounting an electrode assembly inside a case, wherein the electrode assembly comprises a positive electrode sheet, a separator and a negative electrode sheet, and the separator is arranged between the positive electrode sheet and the negative electrode sheet;
injecting a first injection material into the case, wherein the first injection material comprises a first electrolyte salt, a first polymerizable monomer and a first solvent;
performing formation;
subjecting the first injection material to curing reaction to form a first gel electrolyte on at least part of the surface of the positive electrode sheet and the negative electrode sheet;
injecting a second injection material into the case, wherein the second injection material comprises a second electrolyte salt, a second polymerizable monomer and a second solvent;
subjecting the second injection material to curing reaction to form a second gel electrolyte in at least part of the opposite space between the positive electrode sheet and the negative electrode sheet; wherein the cross-linking degree of the gel part of the second gel electrolyte is higher than the cross-linking degree of the gel part of the first gel electrolyte.

In the present application, unless otherwise specified, a "polymerizable monomer" is a cross-linkable monomer that can form a gel skeleton in a gel electrolyte through curing reaction. According to the requirements of the polymerization reaction, an initiator may or may not be added to the injection material containing a first polymerizable monomer or a second polymerizable monomer, a cross-linking agent may or may not be added, and a chain extender may or may not be added. The chain extender may be a chain-extending monomer. In the present application, "carrying out curing reaction" is equivalent to describing the selection of whether to add an initiator, a cross-linking agent, and a chain extender, and the type and amount can be appropriately selected.

In the context of the present application, the terms "first" and "second" in "first electrolyte salt", "second electrolyte salt", "first polymerizable monomer", "second polymerizable monomer", "first solvent" and "second solvent" are used for

descriptive purposes only and are not to be understood as indicating or implying relative importance or quantity, nor are they to be understood as implicitly indicating the importance or quantity of the indicated technical features.

By adding polymerizable monomers to the electrolyte solution raw material, a gel electrolyte can be formed through curing reaction, and the liquid raw material of the electrolyte is further injected and cured in steps. After the first injection, a first gel electrolyte can be formed on the surface of the electrode sheet through formation and the first curing. Then, the second injection and curing are performed to form a second gel electrolyte in at least part of the opposite space between the electrode sheets (or the second gel electrolyte is formed on the side of the first gel electrolyte distant from the surface of the electrode sheet). By controlling the cross-linking degree of the gel electrolyte formed in different curing steps, the gel electrolyte can form gradient and synergistically coordinated cross-linking degrees at different positions of the battery. By controlling the cross-linking degree of the gel part of the second gel electrolyte to be higher than the cross-linking degree of the gel part of the first gel electrolyte, the gel electrolyte battery of the first aspect of the present application can be prepared, wherein the gel electrolyte can have synergistic combination distribution of low cross-linking on the surface of the electrode sheet and high cross-linking in the opposite space between the electrode sheets. On the one hand, the surface of the electrode sheet with a low cross-linking degree can absorb and swell with more liquid electrolyte, thereby having better infiltration in the pores of and on the surface of the electrode sheet, which is more conducive to electrical properties such as capacity. On the other hand, the design of high cross-linking degree in the opposite space between the electrode sheets can give the battery higher rigidity, further enhance the ability of the battery to resist deformation during use, thereby significantly improving the safety performance of the battery cell.

The first polymerizable monomer and the second polymerizable monomer may each independently be selected from one or more of the cross-linkable monomers defined in the context. The first polymerizable monomer and the second polymerizable monomer may also each independently include or comprise a chain-extending monomer. When a chain-extending monomer is included, one or more of the chain-extending monomers described in the context may be included.

In some embodiments, the cross-linkable monomer contains at least two carbon-carbon double bonds.

In the present application, unless otherwise specified, a "carbon-carbon double bond" refers to a C=C structure capable of undergoing addition reaction to form a -CC- structure.

Without limitation, the cross-linkable monomer may include one or more of ethylene glycol dimethacrylate, polyethylene glycol dimethacrylate, 1,4-butanediol dimethacrylate, 1,6-hexanediol dimethacrylate, 1,4-butanediol diacrylate, glycerol dimethacrylate, 1,2-propylene glycol dimethyl acrylate, 1,3-butanediol dimethacrylate, dipropylene glycol diacrylate, trimethylolpropane trimethacrylate, trimethylolpropane triacrylate, glycerol trimethacrylate, pentaerythritol tetramethacrylate, cyclohexanetriol trimethacrylate, divinylbenzene, ethylene glycol diallyl ether, polyethylene glycol diallyl ether, pentaerythritol triallyl ether, and may also include one or more of the halides of the foregoing compounds. The number of halogen atoms in the halide may be one or more. In an embodiment, all hydrogen atoms on the carbon-carbon double bonds are substituted with halogen atoms, such as fluorine atoms. The polyethylene glycol dimethacrylate may include one or more of diethylene glycol dimethacrylate, triethylene glycol dimethacrylate, and tetraethylene glycol dimethacrylate, but is not limited thereto. The polyethylene glycol portion in the polyethylene glycol diallyl ether may be 2, 3, or 4 ethylene glycol units, but is not limited thereto. The aforementioned carboxylate molecule may be methyl ester, ethyl ester, propyl ester or butyl ester, etc., but is not limited thereto. As a non-limiting example, diethylene glycol dimethyl methacrylate is provided. Without limitation, the chain-extending monomer may be an unsaturated monoolefin molecule, and may include, but is not limited to, one or more of vinylidene fluoride, hexafluoropropylene, methyl methacrylate, methyl acrylate, ethyl methacrylate, ethyl acrylate, n-butyl methacrylate, butyl acrylate, n-octyl methacrylate, n-octyl acrylate, allyl methacrylate, styrene, $\alpha$-methylstyrene, acrylonitrile, acrylic acid, methacrylic acid, butyl acrylate, hydroxyethyl acrylate, hydroxypropyl acrylate, hydroxyethyl methacrylate, hydroxypropyl methacrylate, etc., and may also be halides (such as fluorides) of the aforementioned suitable compounds.

In some embodiments, the mass concentration of the first polymerizable monomer in the first injection material is recorded as c1, and the mass concentration of the second polymerizable monomer in the second injection material is recorded as c2, wherein c1<c2.

In some embodiments, the mass concentration of the first polymerizable monomer in the first injection material is 2% to 6%, and further optionally 3% to 5%, with non-limiting examples including 2%, 2.5%, 3%, 3.5%, 4%, 4.5%, 5%, 5.5%, 6%, etc.

In some embodiments, the mass concentration of the second polymerizable monomer in the second injection material is 5% to 10%, and further optionally 8% to 10%, with non-limiting examples including 5%, 5.5%, 6%, 6.5, 7, 7.5, 8, 8.5, 9, 9.5, 10%, etc.

In the present application, the mass concentration expressed as a percentage, unless otherwise specified, the corresponding percentage % corresponds to % (w/w).

In some embodiments, the mass ratio of the first injection material to the second injection material is (1-9): 1.

In some embodiments, the mass ratio of the first injection material to the second injection material is (2-6):1.

The mass ratio of the first injection material to the second injection material can also be any of the following proportions or ratios, and can also be selected from intervals consisting of any two of the following proportions or ratios: 1:1,

1.25:1, 1.5:1, 2:1, 2.5:1, 3:1, 3.5:1, 4:1, 4.5:1, 5:1, 5.5:1, :1, 6.5:1, 7:1, 7.5:1, 8:1, 8.5:1, 9:1, etc.

The synergistic design of low cross-linking on the surface of the electrode sheet and high cross-linking in the opposite space between the electrode sheets in the prepared gel electrolyte battery, or the design of sequentially arranging low cross-linking region and high cross-linking region on the surface of the electrode sheet, can be achieved by controlling the concentration (such as mass concentration c2) of the polymerizable monomer in the injection material during the second injection to be higher than the concentration (such as mass concentration c1) of the polymerizable monomer in the injection material during the first injection. Furthermore, the polymerizable monomer concentration during the two injections can be adjusted to be within a more appropriate range, and the mass ratio between the two injections can also be adjusted, so as to better control the gel electrolyte in the battery to have more appropriate gradient distribution and better balance the comprehensive performance of battery capacity and battery rigidity improvement.

In some embodiments, the gel electrolyte battery prepared by the preparation method is as defined in the first aspect of the present application.

In a third aspect, the present application provide an electrical apparatus, which comprises at least one of the gel electrolyte battery according to the first aspect of the present application and the gel electrolyte battery prepared by the preparation method according to the second aspect of the present application.

The gel electrolyte battery may be used as a power source for the electrical apparatus, and may also be used as an energy storage unit for the electrical apparatus. The above-mentioned electrical apparatus may include mobile devices, electric vehicles, electric trains, ships and satellites, energy storage systems, etc., but is not limited thereto. Among others, the mobile devices may be, for example, a mobile phone, a laptop, etc.; the electric vehicles may be, for example, an all-electric vehicle, a hybrid electric vehicle, a plug-in hybrid electric vehicle, an electric bicycle, an electric scooter, an electric golf cart, or an electric truck, etc., but are not limited thereto.

For the electrical apparatus, the gel electrolyte battery may be selected according to its use requirements.

FIG. 9 shows an electrical apparatus 6 as an example. The electrical apparatus is, e.g., an all-electric vehicle, a hybrid electric vehicle, or a plug-in hybrid electric vehicle. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a gel electrolyte battery as a power source.

Some embodiments of the present application are described below. The embodiments described below are illustrative and are intended only to interpret the present application and should not be construed as a limitation on the present application. If the techniques or conditions are not indicated in the embodiments, it shall be carried out according to the above description, or in accordance with the techniques or conditions described in the literature in the art or in accordance with the product specification. Where no manufacturers are specified, the employed reagents or instruments are all commercially available conventional products, or can be synthesized by the commercially available products in a conventional way.

In the following embodiments, room temperature refers to 20°C to 30°C, and further, may be 25°C. Ethylene glycol dimethacrylate is ethylene glycol ethyl dimethacrylate.

**Example 1.**

(1) Positive electrode sheet

The positive electrode active material $LiNi_{0.8}Co_{0.1}Mn_{0.1}O_2$ (namely NCM811), the conductive agent acetylene black and polyvinylidene fluoride (PVDF) in a weight ratio of 97:1:2 were evenly mixed in the solvent N- methylpyrrolidone (NMP), and then coated on both sides of an aluminum foil, oven dried and cold pressed to obtain a positive electrode sheet. When applying the positive electrode slurry, the coating unit areal density based on dry weight (excluding solvent) is 0.018 $g/cm^2$ (i.e. 18 $mg/cm^2$), and the compacted density of the positive electrode sheet is 3.5 $g/cm^3$.

(2) Negative electrode sheet

The negative electrode active material artificial graphite, the conductive agent acetylene black, the binder styrene butadiene rubber (SBR), and the thickener sodium carboxymethyl cellulose (CMC-Na) in a mass ratio of 97:1:1:1 were mixed evenly in deionized water, coated on both sides of a copper foil, oven dried, and cold pressed to obtain a negative electrode sheet. When applying the negative electrode slurry, the coating unit areal density based on dry weight (excluding solvent) is 0.012 $g/cm^2$ (i.e. 12 $mg/cm^2$), and the compacted density of the negative electrode sheet is 1.7 $g/cm^3$.

(3) Electrolyte

Ethylene carbonate (EC), ethyl methyl carbonate (EMC) and diethyl carbonate (DEC) were mixed in a volume ratio of 1:1:1, and then lithium hexafluorophosphate (LiPF6) was dissolved in the above mixture to obtain an electrolyte base solution, in which the concentration of LiPF6 is 1 mol/L and the density of the electrolyte base solution is about 1.2 g/cm$^3$.

The electrolyte base solution was divided into two portions, and the two portions were mixed with the polymerizable monomer and the initiator in a certain proportion, respectively, and well shaken to prepare two electrolyte mother solutions.

The first injection material was prepared by fully mixing electrolyte base solution: monomer (ethylene glycol dimethacrylate): initiator (azobisisobutyronitrile (AIBN)) in a weight ratio of 95.5%:4%:0.5% for later use.

The second injection material was prepared by fully mixing electrolyte base solution: monomer (ethylene glycol dimethacrylate): initiator (azobisisobutyronitrile (AIBN)) in a weight ratio of 91%:8%:1% for later use.

In this example,
The first polymerizable monomer is ethylene glycol dimethacrylate, and the mass concentration c1 of the first polymerizable monomer in the first injection material is 4%. The second polymerizable monomer is ethylene glycol dimethacrylate, and the mass concentration c2 of the second polymerizable monomer in the first injection material is 8%.

The first electrolyte salt and the second electrolyte salt are both lithium salt lithium hexafluorophosphate. The concentration c1 of the first electrolyte salt (which may be recorded as the first lithium salt) in the first injection material is 1 mol/L, and the concentration c2 of the second electrolyte salt (which may be recorded as the second lithium salt) in the second injection material is 0.9 mol/L.

The first solvent and the second solvent are both a mixed solvent of ethylene carbonate (EC), ethyl methyl carbonate (EMC) and diethyl carbonate (DEC) in a volume ratio of 1:1:1.

(3) Separator

The separator adopted a universal separator of model cellgard 2400 purchased from Cellgard.

(4) Preparation of gel electrolyte batteries

The positive electrode sheet, the negative electrode sheet and the separator were assembled into an electrode assembly in a conventional winding manner, and placed into a case to obtain a square case battery;

> Then the above first injection material was injected, and after sufficient infiltration, allowed to stand at 80°C for 12 h to crosslink and cure it, at this time, a first gel electrolyte with low cross-linking was formed on at least part of the surface of the electrode sheet;
> Then the above second injection material was injected, and after sufficient infiltration, allowed to stand at 80°C for 12 h to crosslink and cure it, forming a second gel electrolyte with a high cross-linking degree in at least part of the opposite space between the positive electrode sheet and the negative electrode sheet.

The volumes of the first injection material and the second injection material are 80% and 20% of the preset total injection volume respectively. The preset total injection volume is determined according to the preset injection coefficient. The injection coefficient has a conventional meaning in the art, and its calculation formula is: the injection volume divided by the preset capacity, in g/Ah.

The weight ratio of the first injection material to the second injection material is 4:1, so as to control the weight ratio of the first gel electrolyte to the second gel electrolyte.

The "mass ratio of the gel part of the gel electrolyte to the liquid electrolyte in the battery" in Table 1 is controlled by changing the ratio of the gel part (or monomer + initiator) to the "solvent + electrolyte salt" base solution to adjust the mass ratio between the two, but the gel part has a high cross-linking degree, and an increase in the proportion of the base solution will increase the mass of the liquid electrolyte.

It should be noted that while forming the first gel electrolyte, a third gel electrolyte may be formed in the pores of the electrode sheet, a fourth gel electrolyte may be formed inside the separator, and a fifth gel electrolyte may be formed on the outermost surface of the electrode assembly. The formation of the third gel electrolyte is related to the infiltration of the first injection material into the electrode sheet. The formation of the fourth gel electrolyte is related to the infiltration of the first injection material into the separator. The formation of the fifth gel electrolyte is related to the formation conditions of the first gel electrolyte.

While forming the second gel electrolyte, a sixth gel electrolyte may also be formed between the electrode assembly and the case. The formation of the sixth gel electrolyte is related to the formation conditions of the second gel

electrolyte.

In the embodiments in the context of the present application (including this example), the amount of the liquid electrolyte is determined by the residual amount after the polymerizable monomer undergoes curing reaction. In the present application, the liquid electrolyte may not be present. When the proportion of additives in the electrolyte base solution is high, residual liquid electrolyte is likely to occur. In addition, the amounts of the third gel electrolyte, the fourth gel electrolyte, the fifth gel electrolyte and the sixth gel electrolyte can also be passively determined according to the distribution and infiltration degree of the electrolyte base solution and the progress of the curing reaction.

**Examples 1-16** adopt basically the same preparation method as Example 1, with the difference in the parameters shown in Table 1 and Table 2. The total mass of the first injection material and the second injection material is kept unchanged, and the mass ratio of the first injection material to the second injection material is in the range of (1-9):1, and further in the range of (2-6): 1.

**Comparative Example 1,** adopts a preparation method substantially the same as that of Example 1, except that a single electrolyte solution is used, the total mass injected is the same as the total mass of the first injection material and the second injection material in Example 1, and the two curing steps are omitted. The electrolyte solution is composed of the electrolyte base solution in Example 1.

Comparative Example 2, adopts a preparation method basically the same as that of Example 1, except that the second injection process is omitted, that is, a single injection material is used, the composition and mass of the single injection material are the same as the first injection material in Example 1, and only one curing is performed. In addition, the curing parameters are the same as those in Example 1.

Comparative Example 3, adopts a preparation method basically the same as that of Example 1, except that the second injection process is omitted, that is, a single injection material is used, the composition of the single injection material is the same as the first injection material in Example 1, the mass of the single injection material is the same as the total mass of the first injection material and the second injection material in Example 1, and only one curing is performed. In addition, the curing parameters are the same as those in Example 1.

**Comparative Example 4,** adopts a preparation method basically the same as that of Example 1, except that the first injection process is omitted, that is, a single injection material is used, the composition and mass of the single injection material are the same as the second injection material in Example 1, and only one curing is performed. In addition, the curing parameters are the same as those in Example 1.

**Comparative Example 5,** adopts a preparation method basically the same as that of Example 1, except that the first injection process is omitted, that is, a single injection material is used, the composition of the single injection material is the same as the second injection material in Example 1, the mass of the single injection material is the same as the total mass of the first injection material and the second injection material in Example 1, and only one curing is performed. In addition, the curing parameters are the same as those in Example 1.

**Comparative Example 6,** adopts a preparation method substantially the same as that of Example 1, except that a single injection material is used. For the composition and mass of the single injection material, refer to Table 1, and only one curing is performed. In addition, the curing parameters are the same as those in Example 1.

The preparation method for the first injection material is as follows: the electrolyte base solution in Example 1: monomer (ethylene glycol dimethacrylate): initiator (azobisisobutyronitrile (AIBN)) in a weight ratio of 92.25%:6%:0.75% was sufficiently mixed for later use.

**Comparative Example 7,** adopts a preparation method substantially the same as that of Example 1, except that: The first injection uses the second injection material in Example 1, and the volume is the same as the first injection material in Example 1, which is 80% of the preset total injection mass.

The second injection uses the first injection material in Example 1, and the volume is the same as the first injection material in Example 1, which is 20% of the preset total injection mass.

Table 1.

| No. | First polymerizable monomer type | Mass concentration c1 (w/w) of the first polymerizable monomer in the first injection material | Percentage of the mass of the first injection material relative to the total injection mass | Lithium salt concentration in the first injection material (mol/L) |
|---|---|---|---|---|
| Example 1 | Ethylene glycol dimethacrylate | 4% | 80% | 1 |
| Example 2 | Ethylene glycol dimethacrylate | 4% | 80% | 1 |
| Example 3 | Ethylene glycol dimethacrylate | 4% | 80% | 1 |

(continued)

| No. | First polymerizable monomer type | Mass concentration c1 (w/w) of the first polymerizable monomer in the first injection material | Percentage of the mass of the first injection material relative to the total injection mass | Lithium salt concentration in the first injection material (mol/L) |
|---|---|---|---|---|
| Example 4 | Ethylene glycol dimethacrylate | 4% | 80% | 1 |
| Example 5 | Ethylene glycol dimethacrylate | 2% | 80% | 1 |
| Example 6 | Ethylene glycol dimethacrylate | 6% | 80% | 1 |
| Example 7 | Ethylene glycol dimethacrylate | 4% | 80% | 1 |
| Example 8 | Ethylene glycol dimethacrylate | 4% | 80% | 1 |
| Example 9 | Ethylene glycol dimethacrylate | 4% | 80% | 1 |
| Example 10 | Ethylene glycol dimethacrylate | 4% | 92% | 1 |
| Example 11 | Ethylene glycol dimethacrylate | 4% | 52% | 1 |
| Example 12 | Ethylene glycol dimethacrylate | 4% | 60% | 1 |
| Example 13 | Ethylene glycol dimethacrylate | 4% | 79% | 1 |
| Example 14 | Ethylene glycol dimethacrylate | 4% | 81% | 1 |
| Example 15 | Ethylene glycol dimethacrylate | 4% | 80% | 1 |
| Example 16 | Ethylene glycol dimethacrylate | 4% | 80% | 1 |
| Comparative Example 1 | None | None | 100% | 1 |
| Comparative Example 2 | Ethylene glycol dimethacrylate | 4% | 80% | 1 |
| Comparative Example 3 | Ethylene glycol dimethacrylate | 4% | 100% | 1 |
| Comparative Example 4 | / | / | 0% | / |
| Comparative Example 5 | / | / | / | / |
| Comparative Example 6 | Ethylene glycol dimethacrylate | 6% | 80% | 1 |
| Comparative Example 7 | Ethylene glycol dimethacrylate | 8% | 80% | 0.9 |

Table 2. Second injection material composition and second curing

| No. | Second polymerizable monomer type | Mass concentration c2 (w/w) of the second polymerizable monomer in the second injection material | Percentage of the mass of the second injection material relative to the total injection mass | Lithium salt concentration in the second injection material (mol/L) |
|---|---|---|---|---|
| Example 1 | Ethylene glycol dimethacrylate | 8% | 20% | 0.9 |
| Example 2 | Ethylene glycol dimethacrylate and divinylbenzene (mass ratio 5:1) | 8% | 20% | 0.9 |
| Example 3 | Ethylene glycol dimethacrylate | 5% | 20% | 0.9 |
| Example 4 | Ethylene glycol dimethacrylate | 10% | 20% | 0.9 |
| Example 5 | Ethylene glycol dimethacrylate | 5% | 20% | 0.9 |
| Example 6 | Ethylene glycol dimethacrylate | 10% | 20% | 0.9 |
| Example 7 | Ethylene glycol dimethacrylate | 8% | 20% | 1 |
| Example 8 | Ethylene glycol dimethacrylate | 8% | 20% | 1.2 |
| Example 9 | Ethylene glycol dimethacrylate | 8% | 20% | 0.7 |
| Example 10 | Ethylene glycol dimethacrylate | 8% | 8% | 0.9 |
| Example 11 | Ethylene glycol dimethacrylate | 8% | 48% | 0.9 |
| Example 12 | Ethylene glycol dimethacrylate | 8% | 40% | 0.9 |
| Example 13 | Ethylene glycol dimethacrylate | 8% | 21% | 0.9 |
| Example 14 | Ethylene glycol dimethacrylate | 8% | 19% | 0.9 |
| Example 15 | Ethylene glycol dimethacrylate | 8% | 20% | 0.9 |
| Example 16 | Ethylene glycol dimethacrylate | 8% | 20% | 0.9 |
| Comparative Example 1 | / | / | / | / |
| Comparative Example 2 | / | / | / | / |
| Comparative Example 3 | / | / | / | / |
| Comparative Example 4 | Ethylene glycol dimethacrylate | 8% | 80% | 0.9 |

(continued)

| No. | Second polymerizable monomer type | Mass concentration c2 (w/w) of the second polymerizable monomer in the second injection material | Percentage of the mass of the second injection material relative to the total injection mass | Lithium salt concentration in the second injection material (mol/L) |
|---|---|---|---|---|
| Comparative Example 5 | Ethylene glycol dimethacrylate | 8% | 100% | 0.9 |
| Comparative Example 6 | / | / | / | / |
| Comparative Example 7 | Ethylene glycol dimethacrylate | 4% | 80% | 1 |

**Test and analysis methods:**

1. Performance analysis of gel electrolytes in different regions

1.1. Sampling method of the first gel electrolyte (on the electrode sheet surface) and the second gel electrolyte (in the opposite space between the positive and negative electrode sheets):

The sample was finely sliced by using a cryo-focused ion beam (FIB) (the smallest scale can be nanoscale slices), and separated to obtain the first/second gel electrolyte samples. At the same time, the morphology, structure and element distribution of each cross section could also be analyzed under FIB continuous slicing using a scanning electron microscope (SEM). Combined with three-dimensional structure reconstruction software, the three-dimensional structure of the sample could be reconstructed to estimate the mass and/or volume. The elemental analysis methods include energy dispersive spectroscopy (EDS) combined with elemental energy spectrum.

1.2. Cross-linking degree analysis

The cross-linking degree test can refer to GB/T 18474-2001 Test method for cross-linking degree of cross-linked polyethylene (PE-X) pipes and fittings.

Sample preparation method: A gel electrolyte sample was taken from a specified position of a gel electrolyte battery, and freeze dried. Electrolyte salts, solvents and other optional components and liquid electrolyte in the gel electrolyte were removed through washing and solid-liquid separation, and the remaining gel skeleton was collected to obtain a gel sample of the "gel part of the gel electrolyte".

Test method: Refer to GB/T 18474-2001 for cross-linking degree test. First, the initial weight W1 of a mesh bag was weighed, the sample was added into the mesh bag and sealed to make a sample bag, the total weight W2 was weighed; then the solvent xylene was added into a flask, and the sample bag was immersed in the solvent. The system was heated and extracted to make the solvent evaporate with uncross-linked monomers or oligomers, leaving behind a cross-linked residual polymer sample. After oven drying, the total weight W3 of the cross-linked polymer sample and the mesh bag was weighed.

The calculation formula is as follows: cross-linking degree = $(W3-W1)/(W2-W1)\times100\%$; W1 is the initial mesh bag weight, W2 is the total weight of the sample and mesh bag before extraction, and W3 is the total weight of the sample and mesh bag after extraction and drying.

1.3. Swelling rate analysis by using the gravimetric method

Sample preparation method: Same as section 1.2.

The weight swelling rate is obtained by the following gravimetric method: The dried gel sample was weighed (to obtain the dry weight $W_d$ of the polymer), then the sample was immersed in the electrolyte solution at room temperature for at least 24 h until swelling equilibrium, and samples were taken at different time points according to multiple parallel samples; the test sample was taken from the electrolyte solution until the weight basically did not change after swelling, the electrolyte solution on the surface was removed with filter paper, and then the sample was weighed to obtain the weight $W_S$ of the sample after swelling equilibrium.

The swelling rate Q of the test sample is calculated by the following formula: $Q = W_S/W_d$, where $W_S$ is the weight of the sample after swelling equilibrium, and $W_d$ is the dry weight of the sample.

1.4. Thermal decomposition temperature

Sample preparation method: Gel samples were obtained using the same method as in section 1.2. for testing.
Thermal decomposition temperature analysis: TG-MS was used for thermal gravimetric analysis and composition analysis to test the thermal decomposition temperature of different components of the material and analyze the composition.

2. Rigidity parameters, elastic modulus

Test sample: battery cell

$$\text{Elastic modulus} = (F/S)/(\Delta H/H)$$

F is the force applied to the surface of the soft-pack battery cell, N; S is the force-bearing area of the soft-pack battery cell, m2; ΔH is the thickness change of the soft-pack battery cell under force; H is the initial thickness of the soft-pack battery cell without force.
The test results can be found in "Elastic modulus" in Table 6. The larger the elastic modulus, the higher the rigidity.

3. Capacity (Ah)

At 25°C, charging was conducted at a constant current rate of 0.5C to 4.25V, then it was switched to constant voltage charging until the current dropped to 0.05C current rate, and then charging was stopped. Then discharging was conducted at a constant current rate of 1C to 2.8V and then discharging was stopped. The discharge capacity (Ah) was recorded.
The test results can be found in "Capacity" in Table 6.

4. Stability analysis of extremes simulation test

Battery cell extrusion test: The battery cell was fully charged to 100% SOC. With an extrusion speed of ≤2 mm/s, the battery cell was extruded in a direction perpendicular to its large surface using a 75 mm semi-cylinder until the extrusion force reached 100 KN. The extrusion deformation of the battery cell was recorded.
The test results can be found in Table 6, "Extremes stimulation: deformation/mm when compressed to 100 KN". The smaller the deformation, the stronger the ability to resist deformation, the better the safety and the lower the risk of failure.

Table 3. Test parameters of the first gel electrolyte and the second gel electrolyte

| No. | First gel electrolyte | | | Second gel electrolyte | | |
|---|---|---|---|---|---|---|
| | Cross-linking degree CX1 | Swelling rate Q1 | Thermal decomposition temperature Td1/°C | Cross-linking degree CX2 | Swelling rate Q2 | Thermal decomposition temperature Td2/°C |
| Example 1 | 52% | 275% | 214 | 73% | 198% | 315 |
| Example 2 | 50% | 281% | 211 | 89% | 154% | 367 |
| Example 3 | 51% | 279% | 212 | 56% | 257% | 232 |
| Example 4 | 49% | 284% | 210 | 91% | 149% | 376 |
| Example 5 | 34% | 331% | 168 | 54% | 256% | 227 |
| Example 6 | 62% | 236% | 255 | 92% | 145% | 379 |
| Example 7 | 51% | 278% | 213 | 66% | 218% | 304 |
| Example 8 | 53% | 274% | 216 | 55% | 261% | 231 |
| Example 9 | 52% | 277% | 213 | 81% | 172% | 345 |
| Example 10 | 49% | 283% | 209 | 72% | 201% | 313 |
| Example 11 | 48% | 285% | 207 | 71% | 204% | 311 |

(continued)

| No. | First gel electrolyte | | | Second gel electrolyte | | |
|---|---|---|---|---|---|---|
| | Cross-linking degree CX1 | Swelling rate Q1 | Thermal decomposition temperature Td1/°C | Cross-linking degree CX2 | Swelling rate Q2 | Thermal decomposition temperature Td2/°C |
| Example 12 | 51% | 278% | 212 | 68% | 217% | 308 |
| Example 13 | 50% | 281% | 211 | 69% | 214% | 309 |
| Example 14 | 52% | 277% | 213 | 70% | 209% | 310 |
| Example 15 | 49% | 282% | 208 | 71% | 206% | 312 |
| Example 16 | 51% | 279% | 211 | 72% | 202% | 314 |
| Comparative Example 1 | / | / | / | / | / | / |
| Comparative Example 2 | 52% | 276% | 214 | / | / | / |
| Comparative Example 3 | 51% | 279% | 212 | / | / | / |
| Comparative Example 4 | / | / | / | 69% | 203% | 308 |
| Comparative Example 5 | / | / | / | 71% | 199% | 312 |
| Comparative Example 6 | 63% | 235% | 256 | / | / | / |
| Comparative Example 7 | 71% | 200% | 313 | 52% | 276% | 214 |
| In Table 3,<br>CX1, Q1 and Td1 are the cross-linking degree, swelling rate (by the gravimetric method) and thermal decomposition temperature test values of the gel part of the first gel electrolyte, respectively;<br>CX2, Q21 and Td2 are the cross-linking degree, swelling rate (by the gravimetric method) and thermal decomposition temperature test values of the gel part of the second gel electrolyte, respectively. | | | | | | |

Table 4. Comparison of test and analysis results of parameters of the first gel electrolyte and the second gel electrolyte

| No. | Gel part mass ratio $m_{1/2}$ | Gel part volume ratio $v_{1/2}$ | Cross-linking degree ratio $CX_{1/2}$ | Swelling rate $Q_{1/2}$ | Thermal decomposition temperature $Td_{1/2}$ | Ratio of lithium salt content proportions $f_{1/2}$ |
|---|---|---|---|---|---|---|
| Example 1 | 0.8:1 | 0.8:1 | 1:1.40 | 1.39:1 | 1:1.47 | 1:0.9 |
| Example 2 | 1:1 | 1:1 | 1:1.78 | 1.82:1 | 1:1.74 | 1:0.9 |
| Example 3 | 0.77:1 | 0.77:1 | 1:1.10 | 1.09:1 | 1:1.09 | 1:0.9 |
| Example 4 | 1:1 | 1:1 | 1:1.86 | 1.91:1 | 1:1.79 | 1:0.9 |
| Example 5 | 0.78:1 | 0.78:1 | 1:1.59 | 1.29:1 | 1:1.35 | 1:0.9 |
| Example 6 | 0.79:1 | 0.79:1 | 1:1.43 | 1.63:1 | 1:1.49 | 1:0.9 |
| Example 7 | 0.8:1 | 0.8:1 | 1:1.29 | 1.28:1 | 1:1.43 | 1:1 |
| Example 8 | 0.75:1 | 0.75:1 | 1:1.04 | 1.05:1 | 1:1.07 | 1:1.2 |
| Example 9 | 0.89:1 | 0.89:1 | 1:1.56 | 1.61:1 | 1:1.62 | 1:0.7 |
| Example 10 | 0.8:1 | 0.8:1 | 1:1.47 | 1.41:1 | 1:1.50 | 1:0.9 |
| Example 11 | 0.8:1 | 0.8:1 | 1:1.48 | 1.40:1 | 1:1.50 | 1:0.9 |
| Example 12 | 0.8:1 | 0.8:1 | 1:1.33 | 1.28:1 | 1:1.45 | 1:0.9 |
| Example 13 | 0.8:1 | 0.8:1 | 1:1.38 | 1.31:1 | 1:1.46 | 1:0.9 |
| Example 14 | 0.8:1 | 0.8:1 | 1:1.35 | 1.33:1 | 1:1.46 | 1:0.9 |
| Example 15 | 0.8:1 | 0.8:1 | 1:1.45 | 1.37:1 | 1:1.50 | 1:0.9 |

(continued)

| No. | Gel part mass ratio $m_{1/2}$ | Gel part volume ratio $v_{1/2}$ | Cross-linking degree ratio $CX_{1/2}$ | Swelling rate $Q_{1/2}$ | Thermal decomposition temperature $Td_{1/2}$ | Ratio of lithium salt content proportions $f_{1/2}$ |
|---|---|---|---|---|---|---|
| Example 16 | 0.8:1 | 0.8:1 | 1:1.41 | 1.38:1 | 1:1.49 | 1:0.9 |
| Comparative Example 1 | / | / | / | / | / | / |
| Comparative Example 2 | / | / | / | / | / | / |
| Comparative Example 3 | / | / | / | / | / | / |
| Comparative Example 4 | / | / | / | / | / | / |
| Comparative Example 5 | / | / | / | / | / | / |
| Comparative Example 6 | / | / | / | / | / | / |
| Comparative Example 7 | 1:0.8 | 1:0.8 | 1.37:1 | 1:1.38 | 1.46:1 | 0.9:1 |

In Table 4,
$m_{1/2}$ is the mass ratio of the gel part of the first gel electrolyte to the gel part of the second gel electrolyte;
$v_{1.2}$ is the volume ratio of the gel part of the first gel electrolyte to the gel part of the second gel electrolyte;
$CX_{1/2}$ is the cross-linking degree ratio of the gel part of the first gel electrolyte to the gel part of the second gel electrolyte;
$Q_{1/2}$ is the swelling rate ratio of the gel part of the first gel electrolyte to the gel part of the second gel electrolyte, tested by the gravimetric method;
$Td_{1/2}$ is the thermal decomposition temperature ratio of the gel part of the first gel electrolyte to the gel part of the second gel electrolyte;
$f_{1/2}$ is the ratio of the mass proportion f1 of the electrolyte salt in the first gel electrolyte to the mass proportion f2 of the electrolyte salt in the second gel electrolyte.

Table 5.

| No. | $M_{1/3}$ | $m_{2/4}$ | (m5+m6)/(m1+m2) | Mass ratio of the gel part of the gel electrolyte to the liquid electrolyte in the battery |
|---|---|---|---|---|
| Example 1 | 1:6 | 7:1 | 1:20 | 1:0.03 |
| Example 2 | 1:6 | 7:1 | 1:20 | 1:0.04 |
| Example 3 | 1:6 | 7:1 | 1:20 | 1:0.02 |
| Example 4 | 1:6 | 7:1 | 1:20 | 1:0.04 |
| Example 5 | 1:6 | 7:1 | 1:20 | 1:0.03 |
| Example 6 | 1:6 | 7:1 | 1:20 | 1:0.04 |
| Example 7 | 1:6 | 7:1 | 1:20 | 1:0.02 |
| Example 8 | 1:6 | 7:1 | 1:20 | 1:0.02 |
| Example 9 | 1:6 | 7:1 | 1:20 | 1:0.03 |
| Example 10 | 1:6 | 7:1 | 1:25 | 1:0.03 |
| Example 11 | 1:6 | 7:1 | 1:8 | 1:0.03 |
| Example 12 | 1:6 | 7:1 | 1:13 | 1:0.03 |
| Example 13 | 1:10 | 7:1 | 1:22 | 1:0.03 |
| Example 14 | 1:4 | 7:1 | 1:17 | 1:0.03 |
| Example 15 | 1:6 | 9:1 | 1:20 | 1:0.03 |
| Example 16 | 1:6 | 5:1 | 1:20 | 1:0.03 |
| Comparative Example 1 | / | / | / | / |
| Comparative Example 2 | / | / | / | 8:2 |

(continued)

| No. | $M_{1/3}$ | $m_{2/4}$ | (m5+m6)/(m1+m2) | Mass ratio of the gel part of the gel electrolyte to the liquid electrolyte in the battery |
|---|---|---|---|---|
| Comparative Example 3 | / | / | / | 1:0.01 |
| Comparative Example 4 | / | / | / | 8:2 |
| Comparative Example 5 | / | / | / | 1:0.05 |
| Comparative Example 6 | / | / | / | 8:2 |
| Comparative Example 7 | 1:6 | 7:1 | 1:20 | 1:0.05 |
| In Table 5,<br>$m_{1/3}$ is the mass ratio of the gel part of the first gel electrolyte to the gel part of the third gel electrolyte, and the significant figures are rounded to integers;<br>$m_{2/4}$ is the mass ratio of the gel part of the second gel electrolyte to the gel part of the fourth gel electrolyte, and the significant figures are rounded to integers;<br>(m5+m6)/(m1+m2) is the ratio of the sum of the gel part mass m5 of the fifth gel electrolyte and the gel part mass m6 of the sixth gel electrolyte to the sum of the gel part mass m1 of the first gel electrolyte and the gel part mass m2 of the second gel electrolyte, and the significant figures are rounded to integers. | | | | |

Table 6.

| No. | Capacity/Ah | Elastic modulus/Mpa | Extremes simulation: deformation/mm when compressed to 100 KN |
|---|---|---|---|
| Example 1 | 70.4 | 50 | 5.7 |
| Example 2 | 70.9 | 75 | 3.3 |
| Example 3 | 70.3 | 42 | 6.6 |
| Example 4 | 70.8 | 76 | 3.1 |
| Example 5 | 70.3 | 39 | 7 |
| Example 6 | 68.1 | 81 | 2.7 |
| Example 7 | 70.5 | 46 | 6.1 |
| Example 8 | 70.2 | 41 | 6.8 |
| Example 9 | 70.7 | 60 | 4.5 |
| Example 10 | 70.3 | 48 | 5.9 |
| Example 11 | 70.5 | 53 | 5.2 |
| Example 12 | 70.4 | 51 | 5.4 |
| Example 13 | 69.2 | 50 | 5.8 |
| Example 14 | 70.8 | 50 | 5.7 |
| Example 15 | 70.7 | 50 | 5.8 |
| Example 16 | 70.3 | 50 | 5.6 |
| Comparative Example 1 | 70.9 | 13 | 8.7 |
| Comparative Example 2 | 70.4 | 20 | 8.2 |
| Comparative Example 3 | 69.2 | 22 | 8 |
| Comparative Example 4 | 64.1 | 40 | 6.9 |
| Comparative Example 5 | 50.6 | 47 | 6 |
| Comparative Example 6 | 67.2 | 19 | 8.4 |
| Comparative Example 7 | 62.7 | 42 | 6.7 |

**Test results and analysis:**

The test and analysis results of the weight, volume, cross-linking degree, swelling rate (gravimetric method), thermal decomposition temperature, and composition (lithium salt) of the prepared gel electrolyte battery can be found in Tables 3, 4, and 5.

According to the test and analysis results, the aforementioned gel electrolyte battery with a special distribution pattern is prepared, a gel electrolyte is formed in the battery, the gel electrolytes comprise a first gel electrolyte located on the surface of the electrode sheet and a second gel electrolyte located in the opposite space between the positive and negative electrode sheets, at least part of the first gel electrolyte is located between the second gel electrolyte and the electrode sheet, and the cross-linking degree of the gel part of the second gel electrolyte is higher than the cross-linking degree of the gel part of the first gel electrolyte, forming synergistic combination distribution of low cross-linking on the surface of the electrode sheet and high cross-linking in the opposite space between the electrode sheets, or a distribution pattern in which the gel electrolyte forms low cross-linking and high cross-linking in sequence from the surface of the electrode sheet.

The test results of battery capacity, elastic modulus and deformation resistance can be found in Table 6. The gel electrolyte batteries prepared in Examples 1-16 have good electrical properties such as capacity while achieving high rigidity, and have high resistance to deformation, low failure risk, and good safety.

Comparative Example 1 does not have a gel electrolyte, Comparative Examples 2-6 only have a gel electrolyte with a single cross-linking degree, and in Comparative Example 7, the cross-linking degree of the gel part of the second gel electrolyte is lower than the cross-linking degree of the gel part of the first gel electrolyte (that is, the cross-linking degree of the gel electrolyte on the surface of the electrode sheet is higher than that in the opposite space between the electrode sheets, or low-cross-linking and high-cross-linking gel electrolytes are formed in sequence from the surface of the electrode sheet). As a result, all of them cannot achieve good electrical properties and high rigidity at the same time. Among them, for Comparative Examples 1-3 and Comparative Example 5, the rigidity is significantly lower than that of the Examples, and the ability to resist deformation is significantly inferior to that of the Examples, and the capacity performance of Comparative Examples 4-5 and 7 significantly deteriorates. The electrical properties and rigidity of Comparative Example 6 are inferior to those of the Examples and the ability to resist deformation also significantly deteriorates.

The technical features of the above-mentioned embodiments can be combined arbitrarily. In order to make the description concise, not all possible combinations of the technical features in the above embodiments are described. However, all the combinations of the technical features should be considered as falling within the scope described in the specification provided that they do not conflict with each other.

It should be noted that the present application is not limited to the above embodiments. The above embodiments are only examples, and embodiments that have the same composition and exert the same effect as the technical ideas within the scope of the technical solution of the present application are included in the technical scope of the present application. The above embodiments only describe several implementations of the present application, and the description thereof is detailed, but cannot therefore be understood as a limitation on the patent scope. In addition, without departing from the scope of the subject matter of the present application, various modifications that can be conceived by those skilled in the art are applied to the embodiments, and other modes constructed by combining some of the constituent elements of the embodiments are also included in the scope of the present application. It should be noted that those of ordinary skill in the art may further make variations and improvements without departing from the concept of the present application, all of which fall within the scope of protection of the present application. Therefore, the scope of protection of the present application should be based on the appended claims, and the specification and drawings can be used to explain the contents of the claims.

## Claims

1. A gel electrolyte battery, comprising an electrode assembly and an electrolyte, wherein the electrode assembly comprises a positive electrode sheet and a negative electrode sheet; the electrolyte comprises gel electrolytes, and the gel electrolytes comprise a first gel electrolyte and a second gel electrolyte; the first gel electrolyte is located on at least part of at least one side surface of at least one electrode sheet, and the second gel electrolyte is located on the side of the first gel electrolyte distant from the electrode sheet; the electrode sheet is the positive electrode sheet or the negative electrode sheet;
the cross-linking degree of the gel part of the second gel electrolyte is higher than the cross-linking degree of the gel part of the first gel electrolyte.

2. A gel electrolyte battery, comprising an electrode assembly and an electrolyte, wherein the electrode assembly

comprises a positive electrode sheet and a negative electrode sheet; the electrolyte comprises gel electrolytes, and the gel electrolytes comprise a first gel electrolyte and a second gel electrolyte;

the first gel electrolyte is located in at least part of a first region and a second region: wherein the first region is a surface region of the negative electrode sheet, and the second region is a surface region of the positive electrode sheet;
the second gel electrolyte is located in at least part of an opposite space between the positive electrode sheet and the negative electrode sheet;
the cross-linking degree of the gel part of the second gel electrolyte is higher than the cross-linking degree of the gel part of the first gel electrolyte.

**3.** The gel electrolyte battery according to claim 1 or 2, wherein the mass ratio $m_{1/2}$ of the gel part of the first gel electrolyte to the gel part of the second gel electrolyte is (0.2-3):1, optionally (0.5-1):1, further optionally (0.79-1):1, and further optionally 1:1.

**4.** The gel electrolyte battery according to any one of claims 1 to 3, wherein the volume ratio $v_{1/2}$ of the gel part of the first gel electrolyte to the gel part of the second gel electrolyte is (0.2-3):1, optionally (0.5-1):1, further optionally (0.79-1):1, and further optionally 1:1.

**5.** The gel electrolyte battery according to any one of claims 1 to 4, wherein the cross-linking degree ratio $CX_{1/2}$ of the gel part of the first gel electrolyte to the gel part of the second gel electrolyte is 1:(1-5), optionally 1:(1.1-2.0), further optionally 1:(1.5-2.0), and still further optionally 1:(1.8-2.0).

**6.** The gel electrolyte battery according to any one of claims 1 to 5, wherein the swelling rate ratio $Q_{1/2}$ of the gel part of the first gel electrolyte to the gel part of the second gel electrolyte is (1-4):1, optionally (1.3-2.5):1, further optionally (1.65-2.0):1, and still further optionally (1.8-2.0):1.

**7.** The gel electrolyte battery according to any one of claims 1 to 6, wherein the thermal decomposition temperature ratio $Td_{1/2}$ of the gel part of the first gel electrolyte to the gel part of the second gel electrolyte is 1:(1-4), optionally 1:(1.1-2.0), further optionally 1:(1.45-2.0), and still further optionally 1:(1.6-1.8).

**8.** The gel electrolyte battery according to any one of claims 1 to 7, wherein the first gel electrolyte and the second gel electrolyte both comprise an electrolyte salt;
the ratio $f_{1/2}$ of the electrolyte salt mass proportion f1 in the first gel electrolyte to the electrolyte salt mass proportion f2 in the second gel electrolyte is 1.5:1 to 1:1.5, optionally 1:(0.7-1.5), further optionally 1:(0.8-1), and still further optionally 1:(0.8-0.95).

**9.** The gel electrolyte battery according to claim 8, wherein the gel electrolyte battery satisfies one or more of the following features:

the mass proportion f1 of the electrolyte salt in the first gel electrolyte is 0.7-1.2 mol/L, and optionally 0.8-1.2 mol/L;
the mass proportion of the electrolyte salt in the second gel electrolyte is 0.7-1.2 mol/L, and optionally 0.8-1.2 mol/L.

**10.** The gel electrolyte battery according to any one of claims 1 to 9, wherein at least part of the first gel electrolyte is located between the second gel electrolyte and the positive electrode sheet, and at least part of the first gel electrolyte is also located between the second gel electrolyte and the negative electrode sheet.

**11.** The gel electrolyte battery according to any one of claims 1 to 10, wherein the gel electrolyte further comprises a third gel electrolyte, and the third gel electrolyte is located in at least part of a third region and a fourth region; wherein the third region is a gap region between negative electrode active materials in the negative electrode sheet, and the fourth region is a gap region between positive electrode active materials in the positive electrode sheet.

**12.** The gel electrolyte battery according to claim 11, wherein the mass ratio $m_{1/3}$ of the gel part of the first gel electrolyte to the gel part of the third gel electrolyte is 1:(4-10), optionally 1:(4-8), and further optionally 1:(4-6).

**13.** The gel electrolyte battery according to any one of claims 1 to 12, wherein at least part of the second gel electrolyte is in contact with the first gel electrolyte in at least part of the first region and the second region.

**14.** The gel electrolyte battery according to any one of claims 1 to 13, wherein the electrode assembly further comprises a separator, the separator is arranged between the positive electrode sheet and the negative electrode sheet, and the second gel electrolyte is located outside the separator.

**15.** The gel electrolyte battery according to claim 14, wherein the gel electrolyte further comprises a fourth gel electrolyte, and the fourth gel electrolyte is located in the inner pores of the separator.

**16.** The gel electrolyte battery according to claim 15, wherein the mass ratio $m_{2/4}$ of the gel part of the second gel electrolyte to the gel part of the fourth gel electrolyte is (4-9):1, optionally (5-9):1, and further optionally (6-8):1.

**17.** The gel electrolyte battery according to any one of claims 1 to 16, wherein the gel electrolyte battery further comprises a case, and the electrode assembly and the electrolyte are both located inside the case;
the electrolyte further comprises or does not comprise a fifth gel electrolyte, and comprises or does not comprise a sixth gel electrolyte, wherein the fifth gel electrolyte is located on at least part of the outermost surface of the electrode assembly, the sixth gel electrolyte is located in at least part of the opposite space between the outermost surface of the electrode assembly and the inner wall of the case, and the cross-linking degree of the sixth gel electrolyte is higher than the cross-linking degree of the fifth gel electrolyte.

**18.** The gel electrolyte battery according to claim 17, wherein the ratio of the sum of the gel part mass m5 of the fifth gel electrolyte and the gel part mass m6 of the sixth gel electrolyte to the sum of the gel part mass m1 of the first gel electrolyte and the gel part mass m2 of the second gel electrolyte satisfies $0 \leq (m5+m6)/(m1+m2) \leq 12.5\%$, optionally satisfies $0 \leq (m5+m6)/(m1+m2) \leq 10\%$, further optionally satisfies $4\% \leq (m5+m6)/(m1+m2) \leq 12.5\%$, still further optionally satisfies $5\% \leq (m5+m6)/(m1+m2) \leq 12.5\%$, and still further optionally satisfies $5\% \leq (m5+m6)/(m1+m2) \leq 10\%$.

**19.** The gel electrolyte battery according to any one of claims 1 to 18, wherein the electrolyte further comprises or does not comprise a liquid electrolyte; optionally, the mass ratio of the gel part of the gel electrolyte to the liquid electrolyte is 1:(0-0.06), further optionally 1:(0.01-0.05), and still further optionally 1:(0.02-0.04).

**20.** The gel electrolyte battery according to any one of claims 1 to 19, wherein the positive electrode sheet comprises a positive electrode active material layer, the positive electrode active material layer comprises a positive electrode active material, and the positive electrode active material comprises a lithium ion material;

optionally, the electrolyte salt in the electrolyte comprises a lithium salt; further optionally, the electrolyte salts in the first gel electrolyte and the second gel electrolyte each independently comprise a lithium salt;
optionally, the electrolyte comprises a lithium salt in a liquid electrolyte.

**21.** A preparation method for a gel electrolyte battery, comprising the following steps:

mounting an electrode assembly inside a case, wherein the electrode assembly comprises a positive electrode sheet, a separator and a negative electrode sheet, and the separator is arranged between the positive electrode sheet and the negative electrode sheet;
injecting a first injection material into the case, wherein the first injection material comprises a first electrolyte salt, a first polymerizable monomer and a first solvent;
performing formation;
subjecting the first injection material to curing reaction to form a first gel electrolyte on at least part of the surface of the positive electrode sheet and the negative electrode sheet;
injecting a second injection material into the case, wherein the second injection material comprises a second electrolyte salt, a second polymerizable monomer and a second solvent;
subjecting the second injection material to curing reaction to form a second gel electrolyte in at least part of the opposite space between the positive electrode sheet and the negative electrode sheet; wherein the cross-linking degree of the gel part of the second gel electrolyte is higher than the cross-linking degree of the gel part of the first gel electrolyte.

**22.** The preparation method according to claim 21, wherein the mass concentration of the first polymerizable monomer in the first injection material is recorded as c1, and the mass concentration of the second polymerizable monomer in the second injection material is recorded as c2, wherein c1<c2;

optionally, the mass concentration of the first polymerizable monomer in the first injection material is 2% to 6%,

and further optionally 3% to 5%;
and optionally, the mass concentration of the second polymerizable monomer in the second injection material is 5% to 10%, and further optionally 8% to 10%.

**23.** The preparation method according to claim 21 or 22, wherein the mass ratio of the first injection material to the second injection material is (1-9):1;
optionally, the mass ratio of the first injection material to the second injection material is (2-6):1.

**24.** The preparation method according to any one of claims 21 to 23, wherein the gel electrolyte battery prepared by the preparation method is as defined in any one of claims 1 to 20.

**25.** An electrical apparatus, comprising at least one of the gel electrolyte battery according to any one of claims 1 to 20 and the gel electrolyte battery prepared by the preparation method according to any one of claims 21 to 23.

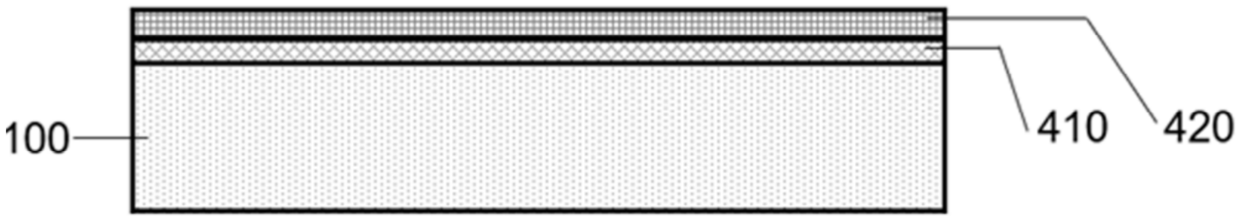


FIG. 1

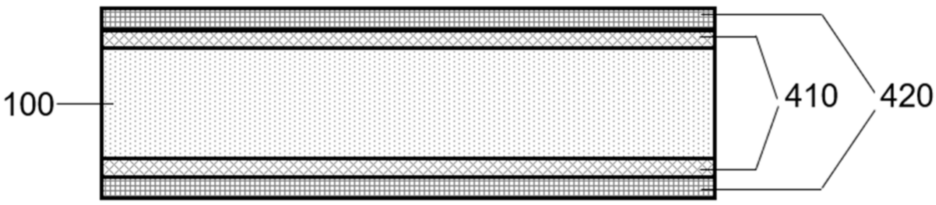


FIG. 2

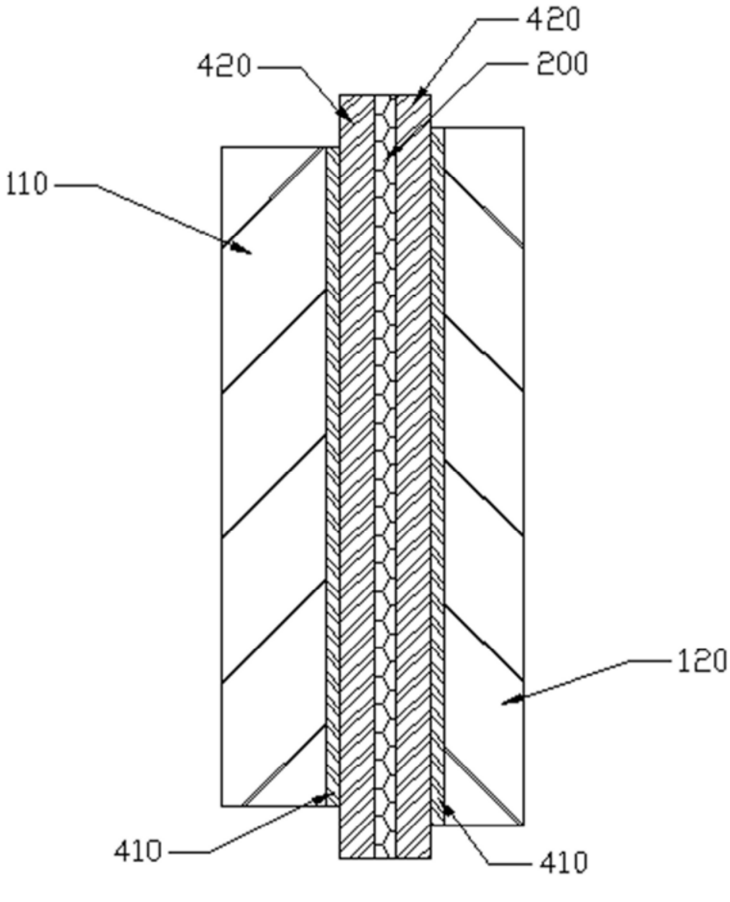


FIG. 3

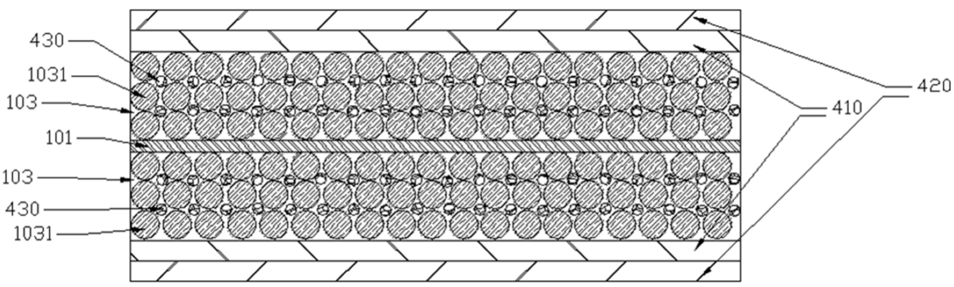


FIG. 4

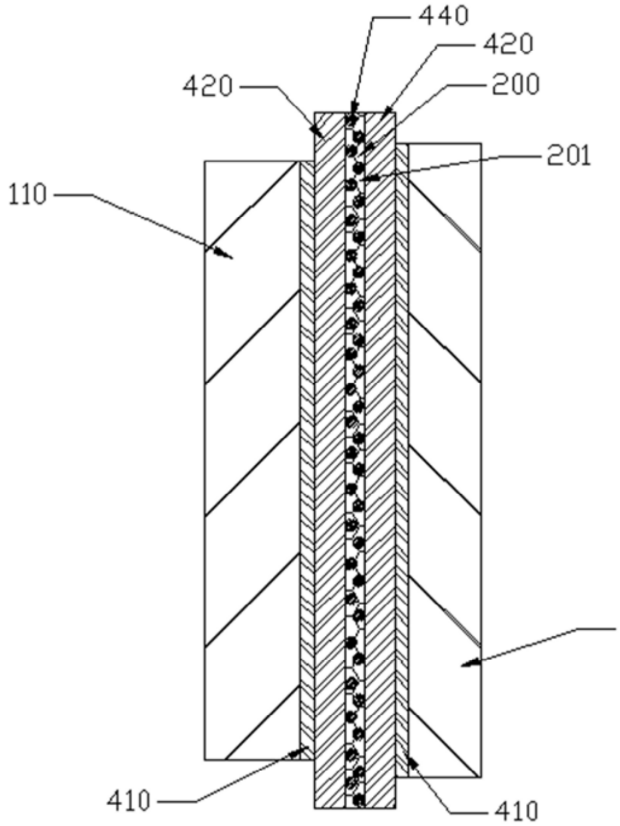
440
420
200
420
201
110
120
410
410

FIG. 5

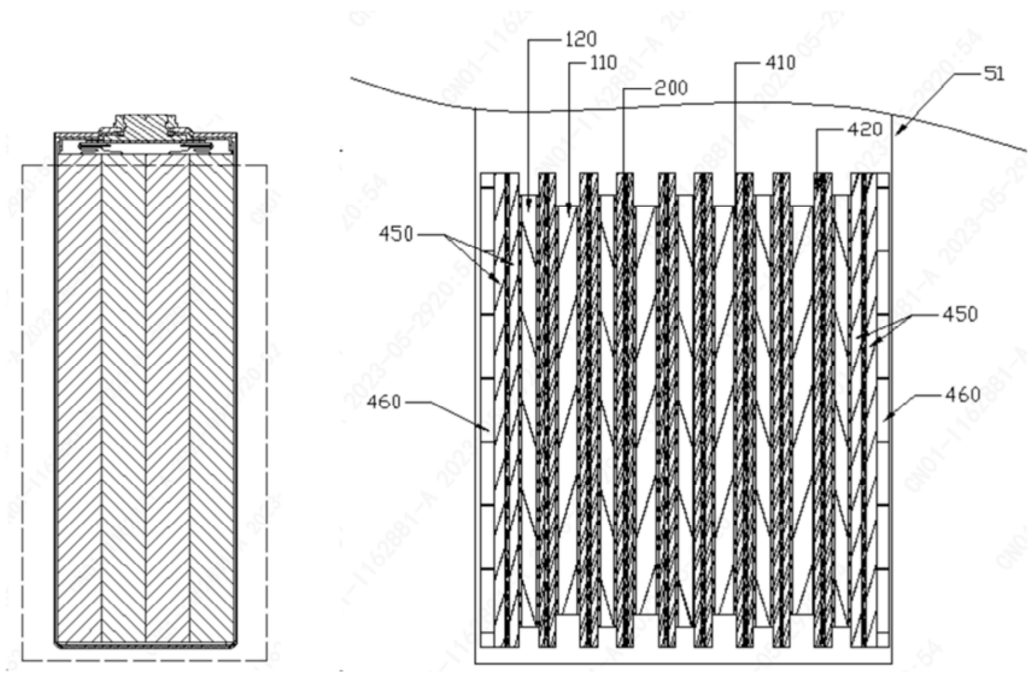
120
110
200
410
51
420
450
450
460
460

FIG. 6

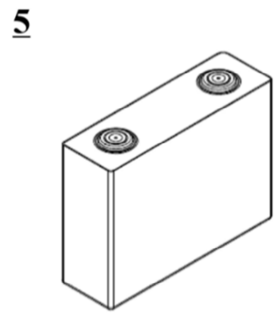


FIG. 7

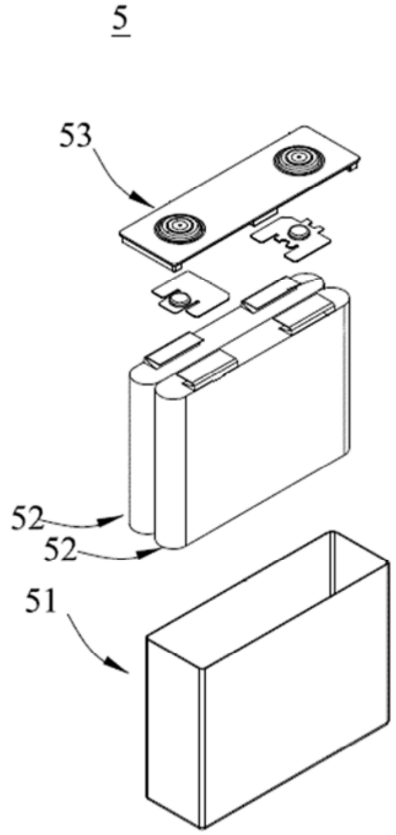


FIG. 8

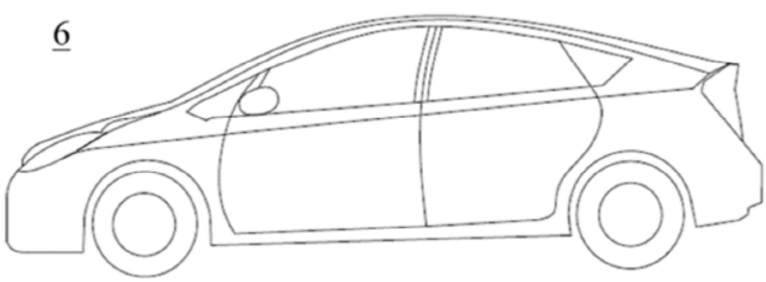


FIG. 9

## INTERNATIONAL SEARCH REPORT

International application No. **PCT/CN2023/097520**

**A. CLASSIFICATION OF SUBJECT MATTER**

H01M10/0565(2010.01)i； H01M10/058(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI: 凝胶, 浓度, 含量, 梯度, 变化, 递增, 递减, gel, content, gradient, increase, decrease

**C. DOCUMENTS CONSIDERED TO BE RELEVANT**

| Category* | Citation of document, with indication, where appropriate, of the relevant passages | Relevant to claim No. |
|---|---|---|
| X | WO 2023075574 A1 (LG ENERGY SOLUTION, LTD.) 04 May 2023 (2023-05-04) description, paragraphs 24-179, and figures 1-3 | 1, 3-9, 14-25 |
| Y | WO 2023075574 A1 (LG ENERGY SOLUTION, LTD.) 04 May 2023 (2023-05-04) description, paragraphs 24-179, and figures 1-3 | 2-20, 24-25 |
| Y | CN 114388869 A (RISESUN MGL NEW ENERGY TECHNOLOGY CO., LTD.) 22 April 2022 (2022-04-22) description, paragraphs 5-84, and figure 1 | 2-20, 24-25 |
| A | JP 2006351552 A (MITSUBISHI ELECTRIC CORP.) 28 December 2006 (2006-12-28) entire document | 1-25 |
| A | JP 2011129528 A (MITSUBISHI ELECTRIC CORP.) 30 June 2011 (2011-06-30) entire document | 1-25 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 January 2024** | **25 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/097520**

| Patent document cited in search report | Publication date (day/month/year) | Patent family member(s) | Publication date (day/month/year) |
|---|---|---|---|
| WO 2023075574 A1 | 04 May 2023 | KR 20230063346 A | 09 May 2023 |
| | | EP 4287341 A1 | 06 December 2023 |
| CN 114388869 A | 22 April 2022 | None | |
| JP 2006351552 A | 28 December 2006 | JP 4779885 B2 | 28 September 2011 |
| JP 2011129528 A | 30 June 2011 | None | |

Form PCT/ISA/210 (patent family annex) (July 2022)